(19) Europäisches Patentamt
European Patent Office
Office européen des brevets

(11) Veröffentlichungsnummer: **0 273 064 B1**

# (12) EUROPÄISCHE PATENTSCHRIFT

(45) Veröffentlichungstag der Patentschrift: **15.09.93**

(51) Int. Cl.5: **G05D 23/19**, F24D 19/10

(21) Anmeldenummer: **86118082.6**

(22) Anmeldetag: **27.12.86**

(54) **Elektrisches Steuer- und Regelgerät für eine Anlage zur Lieferung von Wärmeenergie an räumlich verteilte Raumheizkörper, Warmwasserbereiter od.dgl.**

(43) Veröffentlichungstag der Anmeldung:
**06.07.88 Patentblatt 88/27**

(45) Bekanntmachung des Hinweises auf die Patenterteilung:
**15.09.93 Patentblatt 93/37**

(84) Benannte Vertragsstaaten:
**CH DE FR LI**

(56) Entgegenhaltungen:
**FR-A- 2 481 478**
**FR-A- 2 541 475**
**US-A- 4 316 577**
**US-A- 4 386 649**

(73) Patentinhaber: **LEGRAND GmbH**
**Postfach 1765**
**D-59491 Soest(DE)**

(72) Erfinder: **Krümpel, Hubert, Dipl-Ing. (Grad.)**
**Johannesstrasse 28**
**D-4740 Oelde(DE)**

(74) Vertreter: **Hanewinkel, Lorenz, Dipl.-Phys.**
**Patentanwalt Ferrariweg 17a**
**D-33102 Paderborn (DE)**

EP 0 273 064 B1

**Beschreibung**

Die vorliegende Erfindung betrifft ein elektrisches Steuer- und Regelgerät gemäß dem Oberbegriff von Anspruch 1.

Das hier in Rede stehende Steuer- und Regelgerät enthält, wie im Oberbegriff weiterhin erläutert, Steueranschlüsse - gegebenenfalls verschiedener Priorität dh. für Lastabwurf in Abhängigkeit des Leistungsverbrauchs bzw. des Grads der Notwendigkeit der Aufrechterhaltung ihres Betriebs - verschiedener, einzelnen Verbrauchergruppen zugeordneter Steuerungs- und Schaltungs-Einrichtungen mit Erregungskreisen für Relais der Schalter von getrennten elektrischen Wärmequellen bzw. für elektrische Steuermittel nichtelektrischer Wärmequellen (z.B. Warmwasser-, Gas-Heizung od.dgl.) und eine Anzahl von getrennt von diesen räumlich funktionsfähige Bedieneinheiten, sowie eine Stromversorgung.

In der bisherigen Praxis der Heizungsanlagen haben sich unabhängig voneinander dh. nebeneinander Temperaturregelungs-Einrichtungen und Zeitschalter-Einrichtungen so gut bewährt, daß der Bedarf an sowohl nach der Zeit schaltbaren als auch nach der Raumtemperatur regelbaren Betriebsbedingungen von Heizungsanlagen stetig drängender geworden ist. Dazu kommt, daß sich gerade bei gemäß einem Zeitprogramm gesteuerten Anlagen auch die Notwendigkeit ergibt, das Bedürfnis der Einstellbarkeit von unterschiedlichen Abweichungen vom Tag- bzw. Nachtbetrieb, dh. dem regulären Zeitprogramm, gelegentliche Stromausfälle und besondere Betriebsbedingungen zum Frostschutz und unterschiedliche zum Tag- bzw. Nacht-Betrieb zu berückrichtigen. Die Kombination der genannten Steuermöglichkeiten, zumal mit einer zusätzlichen willkürlichen Ein- und Ausschalt- dh. Umschalt-Möglichkeit zB. mittels eines Drucktasters, ist bisher noch nicht in gewerblich verwertbarer Form erfolgreich entwickelt worden.

Die vorliegende Erfindung geht zunächst aus von einer vorzugsweise elektronischen Schaltuhr gemäß DE-A1-32 14 372, in Kombination mit dem sonstigen allgemein bekannten Stand der Technik, zu dem die Verfahren im Raum angeordneter oder möglichst am Heizkörper gebundener Raumthermostat-Steuerung, der Frostschutz-Schalteinrichtungen und im Falle von elektrischen Heizkörpern vor allem im Falle von Elektroinstallations-intensiver Heizungsanlagen mit Unterteilung in Verbrauchergruppen verschiedener Priorität, bei denen naturgemäß eine maximale Leistungskapazität in Kauf genommen werden muß, dh. Lastabwurf-Einrichtungen für die Abschaltung einzelner Verbraucherzweige, dh. für diese verschiedenen Verbrauchergruppen - wie erwähnt - gegebenenfalls verschiedener Priorität, dh. verschiedener Raumgruppen gehören. Bei der bisherigen Entwicklung möglichst vielseitiger leistungsfähiger Anlagen, Systeme und Geräte auf dem hier in Rede stehenden Spezialgebiet konnten bisher diese Regelungsverfahren noch nicht zufriedenstellend in einer Heizungsanlage kombiniert und funktionell verknüpft verwirklicht und eingesetzt werden.

Vielmehr ist es bis jetzt notwendig gewesen, für die Steuerung im Rahmen der Grenzen der gewünschten Temperaturbereiche, der Sicherungsvorkehrungen (Frostschutz), der von Netzausfällen unabhängigen Funktion und der willkürlichen Ein- und Ausschaltung gesonderte Steuerungs-bzw. Bedienungsmittel bei vorgegebenen Einschaltbedingungen vorzusehen; irgendwelche Anzeige-Einrichtungen für den jeweiligen Betriebszustand oder manuell bedienbare Schaltmittel für die Unterbrechung einer laufenden Temperatur-Regelung waren überhaupt bisher unkombinierbar.

In der Praxis besteht aber ein Bedürfnis an Verbesserungen von Anlagen zur Lieferung von Wärmeenergie an räumlich verteilte Raumheizkörper, Warmwasserbereiter od.dgl., durch Zusatzeinrichtungen, durch welche diejenigen der Wunschvorstellung der Verbraucher solcher Anlagen am meisten entsprechen, wobei Raumgruppen in Raumzonen und Warmwassergeräte ebenfalls in Gruppen oder einzeln in getrennter und verschiedener Weise von einer Schaltuhrgesteuerten Heizung aus auf verschiedene Temperaturen - unabhängig von den an Thermostaten einstellbaren Maximal-Temperaturen - und auch abweichend von dem an der Schaltuhr eingestellten Zeitprogramm wählbar sind. Innerhalb dieses Rahmens wünscht der Verbraucher - ausgehend also von einer Schaltuhr-Steuerung für Hauptverbrauchergruppen durch Tag- und Nachtsteuerung (mit anderen Worten: Normalbetrieb bzw. reduzierter Betrieb) - nicht nur zeitliche Unabhängigkeit von einem solchen vorgegebenen Zeitrahmen, sondern für Raumzonen oder Warmwassergeräte auch zeitlich verschieden abgesenkte Temperaturen, dh. zu jeder Zeit die Möglichkeit einer Umstellung einzelner Raumzonen, zB. in Wohnräumen oder Schlafräumen.

Im Interesse der Energieeinsparung strebt der Verbraucher auch die Möglichkeit an, in vorbestimmbaren Raumzonen oder bei ausgewählten Geräten die Heizung auf ein Mindestmaß zu begrenzen, das gerade eben genügt, um ein Einfrieren oder andere Kälteschäden zu vermeiden. Für die häufiger erwünschten dieser Eingriffe in den Regelmechanismus der ganzen Anlage sollen möglichst bequeme, dh. in der Nähe der Lebensräume oder innerhalb von ihnen Bedieneinheiten zur Verfügung stehen, mittels derer die beabsichtigten Betriebsänderungen vorgenommen werden können, ohne daß andere Regelbereiche gestört werden.

2

Durch die FR-A-24 81 478 ist eine Zentraleinheit mit Digital-Schaltuhr für zwei Heizzonen mit getrenntem Tagesprogrammen bekannt, die an verschiedenen Wochentagen wiederholt werden können. Die Frostschutzschaltung sowie die Handschaltung "Komfort" sind nur für beide Heizzonen gleichzeitig einsetzbar, ebenso ist die Absenk-Temperatur nur gemeinsam einstellbar. Die Temperatur wird in einem nicht erkennbaren Gerät mittels NTC-Widerständen ermittelt, die Meßwerte werden in nicht geschilderter Weise vom Temperaturfühler zur Zentraleinheit übertragen.

Weitere in teilweise einschlägiger Weise beschriebene Geräte für eine Heizzone sind durch die US-A-4,316,577 als Thermostat für Heizung/Kühlung mit der Möglichkeit der Absenkung um 5, 10 oder 15°F für eine mehrstündige Dauer einzustellen bekannt geworden, ferner durch die US-A-4,386,649, als Mikroprozessor-gesteuerte digitale Thermostat-Schaltuhr mit einer einfachen Steuerung von einer Lüfterstufe, zwei Kühlstufen und drei Heizstufen mit Vorhalt-Regelung und einem Einfach-Display, das abwechselnd Zeit und Temperatur anzeigt , und schließlich durch die FR-A-25 41 475 für ein Zentralgerät mit Zeitschaltuhr, Thermostat mit zwei Sollwerten, zum Einstellen der Komfort- und Absenktemperatur. Bei diesem bekannten System ist eine Bedieneinheit für die Verbesserung der Funktion einer Thermostat-Schaltuhr vorgesehen, mit drei Tasten oder Schaltern zur Handsteuerung folgender Funktionen:
- Komfort-Temperatur
- Rücksetzen
- Absenk-Temperatur.

Der vorliegenden Erfindung liegt die Aufgabe zugrunde, eine als Zusatzeinrichtung zu bzw. bei Integration der Schaltuhr-Steuerung der hier in Rede stehenden Anlage, ihren Thermostaten od. dgl., für eine Heizungsanlage dienende Steuer- und Regeleinrichtung gemäß dem Oberbegriff von Anspruch 1 zu verwirklichen, bei der Bediengeräte der Schalteinrichtungen, die mit geringem Aufwand Kanal-, Geräte- oder Klima-zonen-weise installiert werden und in die Gesamt-Schaltsteuerung selektive und unabhängig voneinander eingreifen und die gewünschten Abweichungen von der Generalsteuerung herbeiführen können.

Diese Aufgabe wird erfindungsgemäß durch die Maßnahme laut dem kennzeichnenden Teil von Anspruch 1 gelöst; Weiterbildungen der Erfindung sind Gegenstände der Unteransprüche.

Die Erfindung vermittelt zunächst die Möglichkeit, daß das Steuer- und Regelgerät in einer ersten Betriebsart "Schaltuhrbetrieb" die Schaltuhrsteuerung dieses gemäß vorgegebenem Zeitprogramm zwischen Tag- und Nachtbetrieb - "Normalbetrieb" bzw. "reduzierter Betrieb" - umschaltet, über die Schnittstellen der Verknüpfungseinheiten aber Signale eingegeben werden können, durch welche die Tag-/Nacht-Schaltung aufgehoben und durch die entgegengesetz ersetzt wird und umgekehrt, daß ferner durch einen ersten Umschalter die eine Betriebsart "Schaltuhrbetrieb" in eine zweite Betriebsart "Frostschutz" umgeschaltet wird, wobei aber im Falle der Nachtschaltung das betreffende Heizgerät bzw. die Heizgeräte der betreffenden Klimazone oder das Warmwassergerät durch einen zweiten Umschalter in die eine Schalterstellung für eine abgesenkte, gegebenenfalls wählbare Temperatur gemäß dem Betriebszustand "reduzierter Betrieb" der Betriebsart "Schaltuhrbetrieb" einerseits und für die andere Betriebsart "Frostschutz" in die andere Schalterstellung für die Schaltuhr-und Zeit-unabhängige Mindesttemperatur im Falle "Frostschutz" gebracht wird.

Für jede der Klimazonen bzw. Raumgruppen oder anderer Elektrogerätegruppen ist eine gesonderte logische Auswertungseinheit vorgesehen, durch welche in jeweils entsprechender Weise die zeitlichen Abweichungen vom regulären Schaltuhrenprogramm und die Temperaturen - unterhalb derjenigen der Normalheizung bzw. der maximalen Thermostat-Temperatur - individuell gewählt und eingestellt werden können.

1. Gemäß der Betriebsart entsprechend einem Programm der Schaltuhr können der Betriebszustand "Normalbetrieb" und der andere Betriebszustand "reduzierter Betrieb" mittels eines Schalters bzw. Tasters des bedienten Geräts jederzeit und während jeden Betriebszustandes von der betreffenden Klimazone oder dem betreffenden Gerät aus manuell gewechselt werden und umgekehrt;

2. nach Ablauf des durch Betätigung des Bediengeräts unterbrochenen Befehls wird der Betriebszustand automatisch wieder auf denjenigen gemäß Programm folgendem Befehl rückgeführt;

3. zusätzlich zur Betriebsart "Schaltuhrbetrieb" - vollkommen unabhängig von den durch das Schaltuhr-Programm vorherbestimmbaren Betriebszuständen - ist eine andere Betriebsart für die Temperaturregelung auf eine extreme Grenztemperatur einstellbar, zB. auf eine niedrigere, dh. für Frostschutz, oder eine gewählte höhere Temperatur, im Falle eines Elektrogeräts zB. für den Abtaubetrieb von Klimaanlagen, wobei in einem Falle die Temperatur nicht unter- bzw. im anderen Fall nicht überschritten wird bzw. werden darf;

4. ein irrtümlicher Wechsel des Betriebszustandes "Normalbetrieb" in "reduzierter Betrieb" oder umgekehrt ist zu jedem beliebigen Zeitpunkt des Programms durch erneute Betätigung des Schalters bzw. Tasters wieder aufhebbar, solange die Betriebsart "Schaltuhr-Betrieb" weiterbesteht.

Andererseits gestattet es das neue Steuer- und Regelgerät, die Raumtemperatur bei Normalheizung aller dieser Klimazone zugeordneten Räume mit Hilfe von Raumthermostaten an den Heizgeräten bzw. Heizkörpern unbeeinflußt durch die Funktion des Steuer- und Regelgeräts (im eingeschalteten Zustand der Heizung) unabhängig voneinander einzustellen. Im Falle des Einsatzes dieses Steuer- und Regelgeräts in einer gemeinsamen Heizungsanlage bzw. Installation für mehrere Klimazonen mit unterschiedlichen Kombinationen von Regelungs- und Steuerfunktionen ist das erfindungsgemäße Steuer- und Regelgerät für den gemeinsamen Anschluß an eine einzige Schaltuhr, mit einem oder mehreren Schaltkanälen, durch Ausbau mit einer entsprechenden Anzahl von logischen Verknüpfungseinheiten bzw. zugehörigen (Fern)-Bedieneinheiten in einfacher Weise ergänzbar.

Ein Ausführungsbeispiel der Erfindung ist anhand der Zeichnung in der folgenden Beschreibung erläutert; in der Zeichnung sind dargestellt:

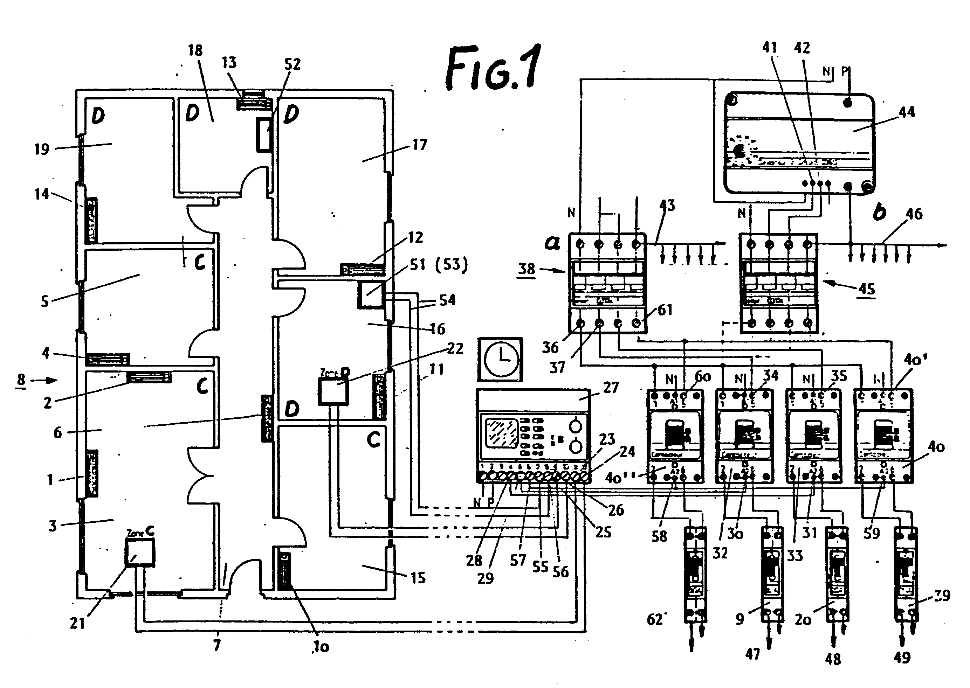

Fig.1:    ein Überblick über die Installations-Organisation für eine Heizungsanlage mit Zeitschaltung durch eine Schaltuhr mit mehreren Schaltkanälen, getrennter Steuerung für zwei Raumgruppen mit je einer Klimazone und gesonderter Thermostat-Schaltung und für eine Warmwasserbereitungsanlage, Hauptsicherung, Schütze und Einzelschalter a) sowohl in einer üblichen Ausführung b) als auch in einer alternativen mit einem Prioritätsschalter für getrennte Schaltkanäle;

Fig.2:

    a) ein schematisiertes Blockschaltbild für eine Installations-Organisation mit logischen Auswertungsschaltungen mit Relais, Schützen, der Schaltuhr und zugehörigen Bedieneinheiten mit den Temperaturfühlern für zwei Raumgruppen mit den Raumzonen C und D, für eine etwas abgewandelte Art mit einer Warmwasserbereitungsanlage W und für eine weitere Raumgruppe H einer anderen Gebäudeeinheit;

    b) ein auf den Kern der Erfindung reduziertes, dh. in stark vereinfachter Form auf die erfindungswesentlichen Details der logischen Auswertungsschaltung beschränkes Blockschaltbild, das die Schnittstellen zwischen den drei Haupt-Verknüpfungseinheiten angedeutet erkennen läßt;

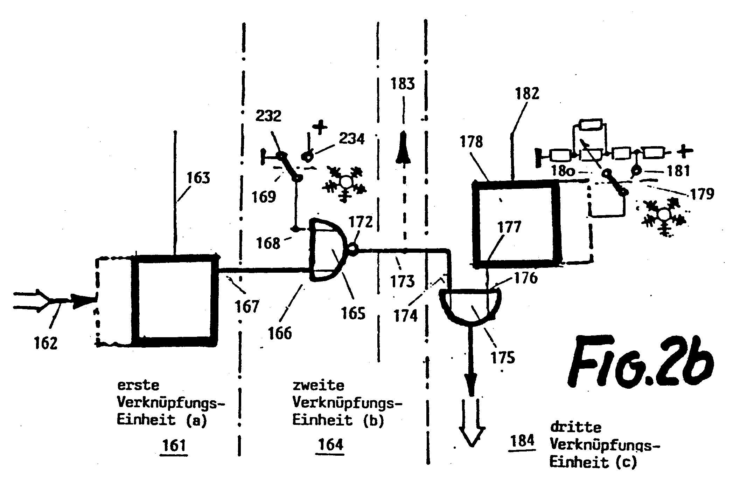

    c) in detaillierter Übersicht der Scaltungsanordnung die wesentlichen Baugruppen einer logischen Auswertungseinheit mit zugehörigem Bediengerät in erster Alternative, das nach dem Prinzip des Kernblockschaltbildes des der Fig.2b aufgebaut ist;

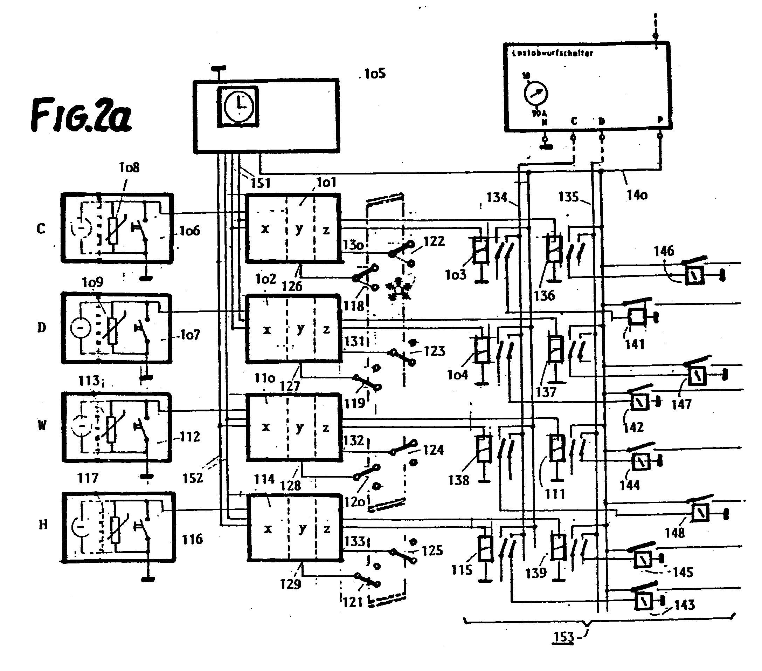

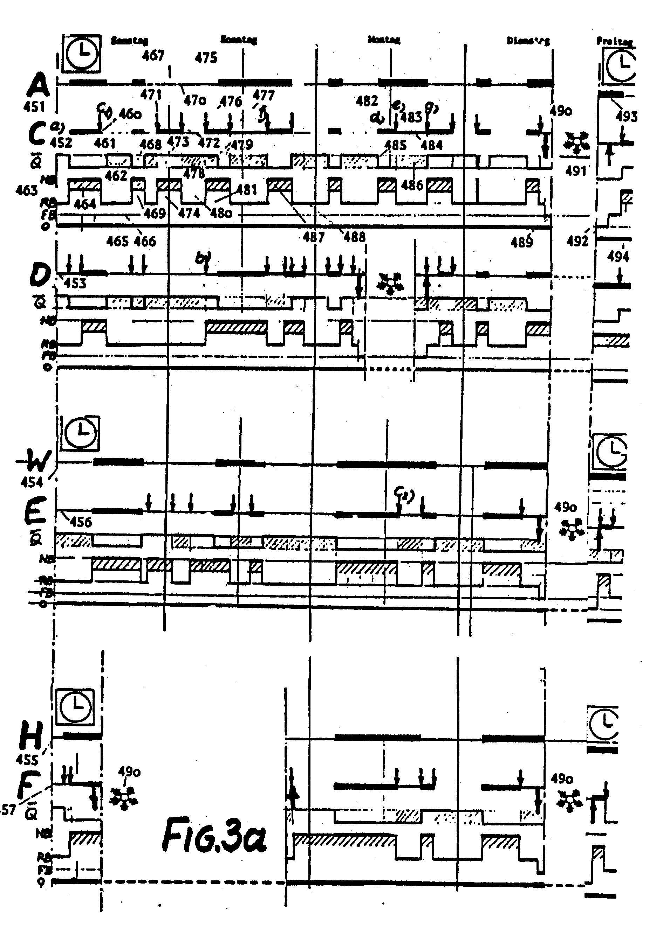

Fig.3:    ein Diagramm für mögliche Betriebszustände und die zugehörigen Spannugsverläufe der Schaltuhr-Programm-Signale im Falle eines Ausführungsbeispiels sowohl mit zweipoligen Anschlüssen an der Schnittstelle vom Ausgang der Bedieneinheit und Eingang einer Auswertungsschaltung des Steuer- bzw. Regelgeräts, als auch am Ausgang dieser Auswertungseinheit, für jeden der vier Heizungsfälle der Fig.2a;

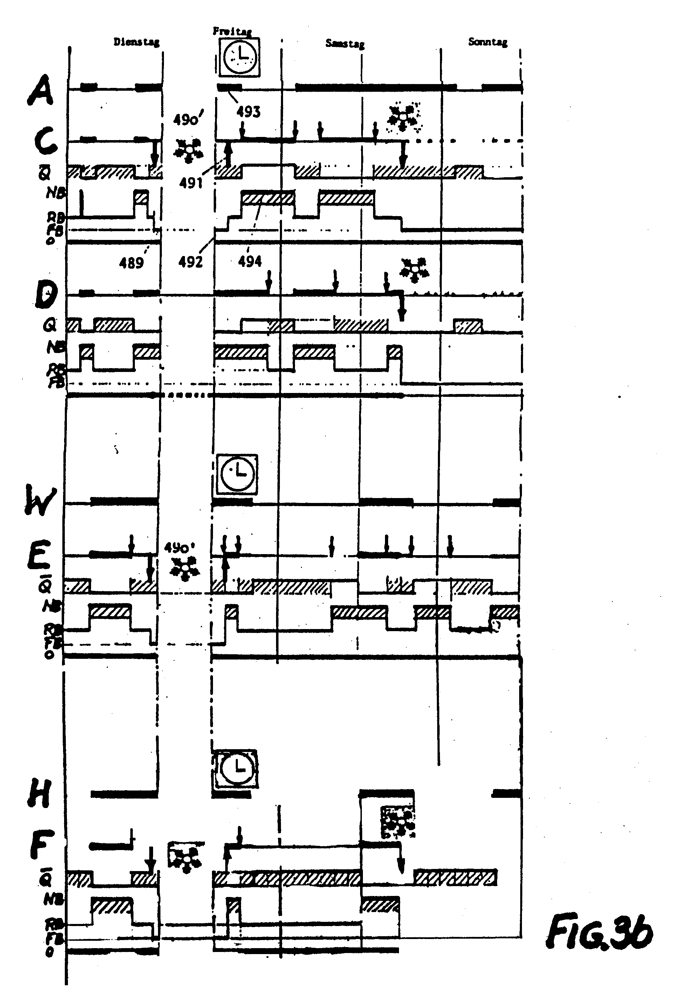

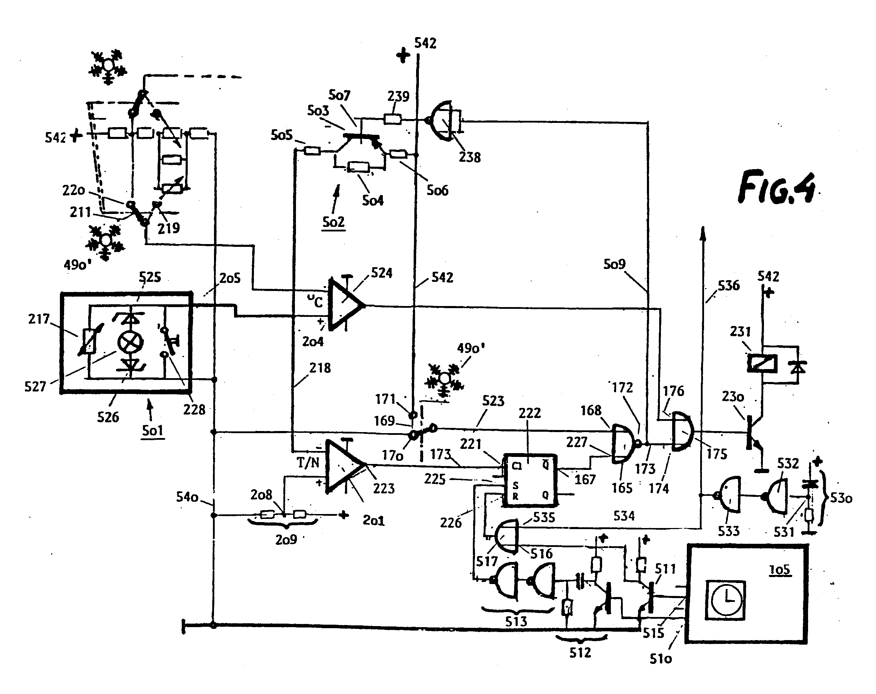

Fig.4:    ein ausführliches Schaltbild einer der in Fig.2a schematisch dargestellten logischen Auswertungsschaltung des Steuer-und Regelgeräts mit zugehöriger Bedieneinheit in zweiter Alternative in Verbindung mit Details des Eingangskreises mit Schaltuhr und des Ausgangskreises;

Fig.5:

    (a) das Schaltbild der Bedieneinheit für das Ausführungsbeispiel erster Alternative mit logischer Verknüpfung und Fernsteuerung bei zweipoligem Anschluß;

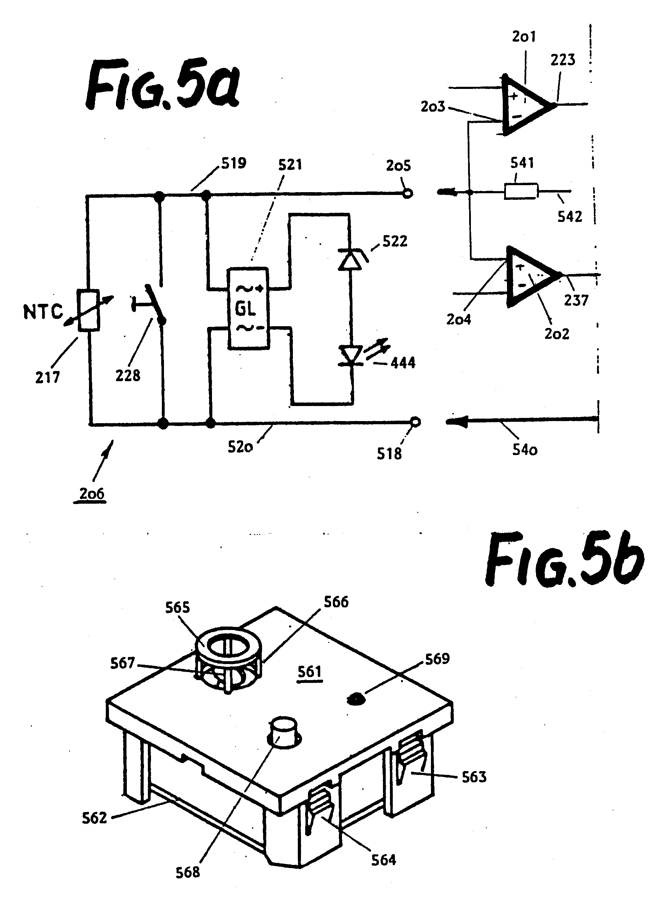

    (b) die perspektivische Wiedergabe einer Bedieneinheit gemäß Fig.5 (a);

In Fig.1 für die Installations-Organisation von hier elektrischen Heizkörpern, aber nicht zwingend dieses Prinzips, in zwei Raumgruppen, den Klimazonen C und D, sind die Heizkörper 1 und 2 im Raum 3, der Heizkörper 4 im Raum 5 und der Heizkörper 6 im Korridor 7 der Raumgruppe 8 (Klimazone C) an den Sicherungsschalter 9 angeschlossen. Die Heizkörper 10 bis 14 der Räume 15 bis 19 sind an den Sicherungsschalter 20 angeschlossen. Jeweils alle Heizkörper, zB. die Heizkörper 1, 2, 4 und 6 der Raumgruppe C bzw. 10 bis 14 der Raumgruppe D sind einer gesonderten Bedieneinheit 21 bzw. 22 mit Temperaturfühler und diese an den zugeordneten Ausgangsklemmen 23, 24 bzw. 25, 26 des elektronischen Steuer- und Regelgeräts 27 mit einer mit diesem baulich vereinigten elektronischen Schaltuhr angeschlossen. Jedem Heizkörper ist, zB. in seinem Gehäuse, ein eigener nicht sichtbar dargestellter Raumthermostat zugeordnet, so daß die Temperatur, wie sonst bekannt und teilweise mit Einzelregelung üblich, bei normalem Heizungsbetrieb in jedem Raum gesondert einstellbar und regelbar ist.

Für einfachere Installationen (Alternative a) sind die Ausgänge 28 und 29 des Steuer- und Regelgeräts 27 an den Steuereingängen 30, 31 der Schaltschütze 32, 33, deren gesteuerte Anschlüsse der Klemmen 34 und 35 an den Ausgängen 36 und 37 des Hauptschalters 38 verbunden. In der Installation (Fig.1) des Ausführungsbeispiels ist noch ein weiterer Kanal mit dem Sicherungsschalter 39 und dem Schütz 40 vorgesehen, dessen Eingang 40′ über den Hauptschalter 38 mit dessen mit Priorität versehenem Ausgang 61 direkt mit dem Pol P der Netzleitung verbunden ist und der für die Energieversorgung von wahlweise schaltbaren Verbrauchern, wie zB. Beleuchtung, Küchengeräte und sanitäre Einrichtungen dient.

Anstelle des Hauptschalters 38, der für einfachere Installation auch durch einen einkanaligen Hauptschalter ersetzt sein kann, bei dem die erwähnten wahlweise schaltbaren Verbraucher an dem Eingang 43 angeschlossen sein können, ist in Verbindung mit dem Hauptschalter 45 (Verbindungen zu Alternative b) gestrichelt gezeichnet) der alternative Einsatz eines Prioritätsschalters 44 mit Ausgängen 41, 42 dargestellt, an denen im Zuge ebenfalls eines Hauptschalters 45 die bereits beschriebenen Schaltschütze 32, 33 und 40 mit den ebenfalls beschriebenen zugehörigen Verbraucherschaltungen, nämlich den Heizkörpern der Raumgruppe 1 ("C") einerseits und den Heizkörpern der Raumgruppe 2 ("D") andererseits angeschlossen sind, die im Falle von Netzüberlastungen mit unterschiedlicher Priorität abgeworfen werden. In gleicher Weise wie im Falle der Alternative a) gehören der Sicherungsschalter 39 und der Ausgangsanschluß 46 wiederum zu Verbraucherkreisen, die immer wahlweise einschaltbar sein und einschaltbar bleiben müssen (vgl. Ziff.39 und 43).

So sind in Fig.1 bei Anschluß von Heizkörpern der Zone D, zB. der Heizkörper 10 und 11, an die Anschlußstellen 47 des Sicherungsschalters 9 diese mit etwas niedrigerer Priorität versehen, und werden, wenn der Lastabwurfschalter einen Teil der an das Netz angeschlossenen Verbraucher abschaltet, noch nicht abgeschaltet, wohingegen die Heizkörper 12 bis 14 der Zone D, mit noch niedrigerer Priorität versehen, wenn sie mit den Klemmen 48 des Sicherungsschalters 20 verbunden sind, abgeschaltet werden, sobald hierzu vom Prioritätsschalter 44 über dessen Ausgang 42 Signal auftritt, während weitere Verbraucher, die von dem Ausgangsanschluß 46 gespeist werden, überhaupt nicht abgeworfen werden. Hierzu müssen die Steueranschlüsse 30, 31 und 59 der Schütze 32, 33 bzw. 40 mit den Anschlüssen 28, 29 und 57 des elektronischen Steuergeräts 27 verbunden sein.

In Raum 16 ist ein Warmwasserbereiter 51 installiert, der außerdem das Warmwassergerät 52 speist. Mit dem Warmwasserbereiter 51 ist die zugehörige Bedieneinheit 53 mit Temperaturfühler baulich vereinigt, und über die zweipolige Leitung 54 mit den Ausgangsklemmen 55, 56 des elektrischen Steuer- und Regelgeräts 27 verbunden, mit welchem, wie schon beschrieben, eine elektronische Schaltuhr (105 in Fig.2a) baulich vereinigt ist. Unabhängig von dem Temperaturfühler der Bedieneinheit 53 ist jeder der beiden Warmwasserbereiter 51 und 52 mit einem Geräte-Thermostat ausgestattet, durch welchen die maximale Temperatur bei normalem Heizungsbetrieb gesondert einstellbar und regelbar ist.

Der Ausgang 57 des Steuer- und Regelgeräts 27 liegt am Steuereingang 58 des Schaltschützes 40'', dessen gesteuerter Anschluß der Klemme 60 an dem Ausgang 61 des Hauptschalters 38 bzw. 45 angeschlossen sind. Die übrigen Anschlüsse an Hauptschalter 38 bzw. 45, Sicherungsschalter 62 und gegebenenfalls Lastabwurfschalter 44 sind gleich verlegt wie im Falle der Schaltschütze 32 und 33. In dem Ausführungsbeispiel der Fig.1 sind über den mit Priorität versehenen Ausgang 58 des Lastabwurfschalters 44 außer über den Eingang 40'' des Schützes 40 gesteuerte Verbraucher auch die über den Eingang 60 des Schützes 59 gesteuerten Warmwasserverbraucher nicht durch den Lastabwurfschalter 44 abschaltbar angeschlossen.

In Fig.2a ist ein schematisches Blockschaltbild für eine Installtions-Organisation mit den logischen Auswertungsschaltungen 101, 102 für zwei Raumgruppen C und D, Relais 103, 104, der Schaltuhr 105 und zugehörigen Bedieneinheiten 106, 107 mit den Temperaturfühlern 108, 109 für die Raumzonen C und D und einer etwas abgewandelten Art devon als logische Auswertungsschaltung 110, Relais 111, Bedieneinheit 112 mit Temperaturfühler 113 für eine Warmwasserbereitungsanlage W, vereinigt mit einer ähnlichen Installations-Organisation, logische Auswertungsschaltung 114 mit Relais 115 und Bedieneinheit 116 einschließlich Temperaturfühler 117 für eine Raumgruppe H einer anderen Gebäudeeinheit zusammengefaßt dargestellt.

Die logischen Auswertungsschaltungen enthalten - jeweils nichtdargestellte, sondern nur gestrichelt angedeutete - Verknüpfungseinheiten x, y, z, die mit einem Wechselschalter 118, 119, 120, 121 bzw. 122, 123, 124, 125 ausgestattet, an zugeordnete Schnittstellen zwischen den Verknüpfungseinheiten der erwähnten Art über die Eingänge 126, 127, 128, 129, bzw. 130, 131, 132, 133 angeschlossen und deren Stellungen mit den Bezugsziffern 118, 120 für die Betriebsart "Schaltuhr", dabei Betriebszustand "Normalbetrieb" bzw. 119, 121 für die Betriebsart "Frostschutz" bezeichnet sind (die entgegengesetzten Stellungen sind den jeweils anderen Betriebsarten zugeordnet) bzw. in der anderen Gruppe den mit den Bezugsziffern 122, 124 für den Betriebszustand "reduzierter Betrieb" bzw. Stellungen 123, 125 für die Betriebsart "Frostschutz" zugeordnet sind.

Während die Arbeitskontakte der Relais 103, 104, 111, 115 an die Stromzweige 134 (Lastabwurfklemme a) bzw. 135 (Lastabwurfklemme b) angeschlossen sind, werden die Arbeitskontakte der Schütze 136, 137, 138, 139 von dem Ausgang P (ohne Lastabwurf) des Lastabwurfschalters 44 über die Leitung 140 versorgt. An die Arbeitskontakte der Relais mit Lastabwurf an der Lastabwurfklemme a) sind die Schütze 141, 142, 143, an die Arbeitskontakte der Relais mit Lastabwurf an der Lastabwurfklemme b sind die Schütze 144, 145 und an die Arbeitskontakte der Relais ohne Lastabwurf über die Leitung 140 sind die Schütze 146, 147, 148 angeschlossen.

An dem Eingang der Verknüpfungseinheit "x" vor der ersten Schnittstelle liegt für die Steuerung der Heizung in den Raumzonen C und D das Leitungspaar 151 für ein erstes Schaltuhr-Zeitprogramm, an dem Eingang der entsprechenden Verknüpfungseinheit für die Steuerung der Warmwasserbereitungs-Anlage (Auswertungs-Schaltung 110) liegt das Leitungspaar 152 eines zweiten Schaltuhr-Zeitprogramms, wobei angenommen ist, daß die Warmwasserbereitungs-Anlage für mehrere Raumhruppen eingerichtet ist und der Eingang der entsprechenden ersten Verknüpfungseinheit für die Steuerung der Heizung in der Raumgruppe H einer anderen Gebäudeeinheit vorübergehend unbenutzt und die Auswertungsschaltung deshalb auf Frotzschutz gestellt ist.

In den gezeichneten Stellungen der an die Schnittstellen 126 bis 129 bzw. 130 bis 133 angeschlossenen Wechselschalter sind, wie schon indirekt erwähnt, von denjenigen für die Betriebsart "Schaltuhrbetrieb" die einen zB. 118 für den Betriebszustand "Normalbetrieb" und andere, zB. 122 für den Betriebszustand "reduzierter Betrieb" und die dritte Gruppe zB. 123 und andere für die Betriebsart "Frostschutzbetrieb" wirksam dargestellt. Mit diesen Alternativen soll gezeigt sein, daß es auf diese einfache Art und Weise möglich ist, innerhalb einer Installations-Organisation für eine Heizungsanlage mit Zeitschaltuhr mit mehreren Schaltkanälen nebeneinander sowohl die Betriebsart "Schaltuhrbetrieb" mit Betriebszuständen "Normalbetrieb" und "reduzierter Betrieb", als auch Betriebsart "Frostschutz" zu wählen, wobei sogar für zwei Klimazonen (C und D) der gleichen Wohnungseinheit die eine auf Schaltuhrbetriebsart "Normalbetrieb" - oder "reduzierter Betrieb" - und die andere auf Betriebsart "Frostschutz" gestellt sein kann, zB., weil in einer kalten Jahreszeit einige Räume nicht benützt werden.

Die Funktion des Steuer- und Regelgeräts (27 in Fig.1) ist nämlich für zwei Betriebsarten eingerichtet, eine erste, "Schaltuhren-Betrieb" bzw. "Automatik" deren Betriebszustände "Normalbetrieb" in "reduzierter Betrieb" und umgekehrt für die Klimazonen gemäß dem eingegebenen Programm und zeitabhängig gesteuert werden, sowie eine zweite Betriebsart "Frostschutz", die weder von den Bedieneinheiten der Klimazonen aus, noch durch das Schaltuhren-Programm geändert werden kann und bei der durch die betreffende Einstellung der Schalter (zB. 119, 123 in der gezeichneten Stellung) eine festvorgegebene, sehr niedrige Temperatur oberhalb des Gefrierpunktes eingestellt wird. In dem gezeichneten Ausführungsbeispiel der Fig.2a sind sowohl die Bedieneinheiten für die Klimazonen C und D, die Warmwasserbereitungsanlage W und die Raumgruppe H, die Betriebsarten "Schaltuhr- Betrieb" bzw. "Frostschutz", als auch die Betriebszustände "Normalbetrieb" bzw. "reduzierter Betrieb" unabhängig voneinander einstellbar. Als Schaltuhr 105 ist vorzugsweise eine solche der elektronischen Bauart vorgesehen, es ist aber auch eine solche der seit längerem eingeführten Bauart verwendbar, wenn sie die notwendigen Kanäle, dh. unabhängig voneinander steuerbare Schaltausgänge, aufweist.

In Fig.2b ist in stark reduzierter Form der eingentliche Kern der erfindungsgemäßen Schaltung einer der Auswetungseinheiten 101, 102, 110, 114 der Fig.2a dargestellt. Diese enthalten in einer ersten Verknüpfungseinheit 161 die Eingangs-Verknüpfungs-Einheit ("x" in Fig.2a) für Steuersignale, von denen die zu dem betreffenden Schaltuhren-Programm gehörenden Ausgangssignale 151, 152 (Fig.2a) einer Schaltuhr (105 in Fig.2a) an einem ersten Eingang 162 angeschlossen sind, und an einem zweiten Eingang 163 ein Schaltsignal für den Wechsel zwischen den Betriebszuständen "Normalbetrieb" und "reduzierter Betrieb" und umgekehrt. Zu der zweiten Verknüpfungseinheit 164 gehört ein als zweite Verknüpfungseinheit ("y" in Fig. 2a) dienendes NOR-Glied 165, an dessem einem Eingang 166 der Ausgang 167 der ersten Verknüpfungseinheit liegt und dessen zweiter Eingang 168 mittels des Wechselschalters 169 zwischen dem Betriebszustand "Normalbetrieb", wenn er an dem einen Pol 170 liegt, und, wenn er an dem anderen Pol 171 liegt, der Betriebsart "Frostschutz" umschaltbar ist

Der Ausgang 172 des NOR-Glieds 165 ist über die Leitung 173 mit dem einen Eingang 174 der dritten Verknüpfungseinheit ("z") in Fig.2a mit dem OR-Glied 175 in der Verknüpfungseinheit 184 verbunden, deren anderer Eingang 176 an den Ausgang 177 des logischen Bauelements 178 angeschlossen ist, das als weiteres Verknüpfungsglied den Temperaturvergleich durchführt und dessen einer Eingang über den Wechselschalter 179 zwischen einer Vergleichsspannung am Pol 180 für den Betriebszustand "Normalbetrieb" und einer anderen Spannung an dem Pol 181 für die Betriebsart "Frostschutz" umschaltbar ist. Der andere Eingang 182 des logischen Bauelements 178 ist mit dem Eingang 163 eines dem Drucktaster 228 zugeordneten, als Verzögerungsglied dienenden logischen Bauelements in Eingangskreis der Verknüpfungseinheit 161 verbunden (aus Übersichtlichkeitsgründen nicht gezeichnet).

Über die Leitung 183 wird die auf der Leitung 173 liegende Spannung, die im Falle des Betriebszustandes "Normalbetrieb", dh. wenn das NOR-Glied auf beiden Eingängen von dem Signal "L" beaufschlagt wird, ein Signal "H" führt, eine zur Anzeige dieses Betriebszustandes verwertbare Spannung abgegeben, die aber, wenn entweder der zweite Eingang 168 des NOR-Glieds 165 oder dessen erster Eingang 166 mit einem "H"-Signal beaufschlagt wird, den Wert "L", dh. die Spannung Null führt. Der Spannungszustand dieser Leitung 173 ist also zur Anzeige des Normalbetriebs verwertbar, während in Betriebszustand "reduzierter Betrieb" und bei der Betriebsart "Frostschutz" keine Anzeige erfolgt.

Wenn man die Eingänge 163 und 182, wie schon erwähnt, mit fer Leitung 183 gemeinsam an einen Eingang einer Bedieneinheit anschließt, deren zweiter Eingang auf null liegt, dann ist es durch diese logische Auswertungseinheit, die als Kaskadengruppe von Verknüpfungseinheiten mit Verzweigungen ausgebildet ist, möglich, mit einer Bedieneinheit über eine zweipolige Leitung das Steuer- und Regelgeräts auf einen der beschriebenen Betriebszustände "Normalbetrieb" und "reduzierter Betrieb" der Betriebsart "Schaltuhrbetrieb" oder auf die Betriebsart "Frostschutz" einzustellen, und zwar getrennt für verschiedene Klimazonen odre elektrische Anlagen.

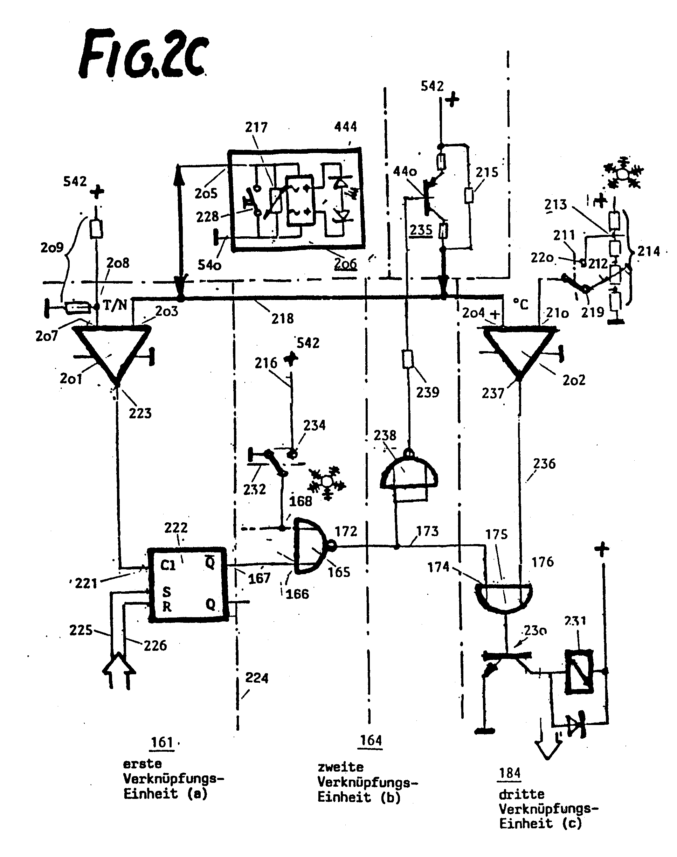

In Fig.2c sind die Verknüpfungseinheiten 161, 164, 184 nochmals, aber in ihrem detaillierten Aufbau, sowie ergänzt durch den Ausgangskreis (153 in Fig.2a) und durch die detaillierte Schaltung der Bedieneinheit 206 in erster Alternative wiedergegeben. Zu der Verknüpfungseinheit 161 gehört der Vergleicher 201 und zu der Verknüpfungseinheit 184 der Vergleicher 202 - beide Operationsverstärker - deren eine Eingänge 203, 204 - mit vertauschten Polungen verbunden - an dem Signal-Ein- bzw. Ausgang 205 der Bedieneinheit 206 angeschlossen sind. Der andere Eingang 207 des Vergleichers 201 ist mit dem Knotenpunkt 208 des Spannungsteilers 209 verbunden, also mit einer fest eingestellten Bezugsspannung beaufschlagt, der andere Eingang 210 des Vergleichers 202 mit einer Bezugsspannung, die über den Wechselschalter 211, am Pol 219 einerseits auf einen einstellbaren Wert des Einstellers 212 für den Betriebszustand "reduzierter Betrieb" und am Pol 220 andererseits für Knotenpunkt 213 des Spannungsteilers 214 auf einen festen Wert für die Betriebsart "Frostschutz" umschaltbar ist.

Ferner ist der Eingang 205 der Bedieneinheit 206 über den Widerstand 215 mit dem positiven Pol 216 der Stromquelle verbunden, so daß über den als Sensor wirkenden temperaturabhängigen Widerstand 217 auf der Verbindungsleitung 218 zwischen den Eingängen 203 und 204 eine Spannung auftritt, die am Ausgang des Vergleichers 201 mit der festen Bezugsspannung an den Knotenpunkt 208 normalerweise kein Signal bewirkt, aber bei Kurzschließung des Drucktasters 228 ein Steuersignal an den CLOCK-Eingang 221 des FLIP-FLOP-Bausteins 222 herbeiführt, während sie im Betriebszustand "reduzierter Betrieb" (vgl. die Beschreibung der Verknüpfungseinheit 184, in Fig.2b) am Ausgang 237 des Vergleichers 202 entweder entsprechend der Temperatur im Betriebszustand "reduzierter Betrieb" in der Stellung des Wechselschalters 211 auf dem Pol 219 oder in seiner Stellung auf dem Pol 220 entsprechend der Temperatur in der Betriebsart "Frostschutz" ein Steuersignal für die Zweipunkt-Regelung der Temperatur herbeiführt.

An dem Eingang (CI) 221 des FLIP-FLOP-Bausteins 222 der Verknüpfungseinheit 161 ist also der Ausgang 223 des Vergleichers 201 angeschlossen, dessen Setz- 224 und Rücksetz-Eingang 225 - TAG-bzw. NACHT-Ausgangssignale 151 der Schaltuhr - beaufschlagt sind. Solange der Spannungswert auf der Leitung 218 im Betriebszustand "Normalbetrieb gemäß der Zweipunkt-Regelung um den SOLL-Wert (Bezugsspannung am Eingang 207) schwankt, wird somit durch das Signal am Ausgang 223 des Vergleichers 201 und folglich am Eingang 221 des FLIP-FLOP-Bausteins 222 das Signal an dessen Ausgang ($\overline{Q}$) 224 nicht beeinflußt, wohl aber, wenn es durch den Drucktaster 228 kurzgeschlossen wird. Dann gibt nämlich der Vergleicher 201 ein Signal ab, das bei gesetztem Eingang 225 (S) den Wert "L" und bei zurückgesetztem Eingang 226 (R) das Signal "H" am Ausgang ($\overline{Q}$) 224 gegen den jeweils entgegengesetzten austauscht.

Da das NOR-Glied 165 in der Verknüpfungseinheit 164 an seinem Eingang 227 bei gesetztem Eingang 225 des FLIP-FLOP-Glieds 222 von dem Signal "L" beaufschlagt wird, führt der Ausgang 172 des NOR-Glieds 165 das Signal "H", wodurch das OR-Glied 175 der Verknüpfungseinheit 184 und somit auch der Transistor 230 des Ausgangskreises mit dem Relais 231 leitend gesteuert und das Relais 231 betätigt wird.

In dem beschriebenen Schaltungszustand ist der Wechselschalter 232 und damit der andere Eingang 233 des NOR-Glieds 165 auf Spannung null geschaltet, so daß im Ausgang 172 das Signal "H", wie beschrieben, möglich ist. Wenn aber dieser Wechselschalter 232 mit seinem anderen Pol 234 mit dem positiven Pol der Stromquelle verbunden ist, dann ist der Ausgang 172 des NOR-Glieds 165 auf "L" geschaltet, der Transistor 230 über das OR-Glied durch das Siganl "L" an dessen Eingang 176 nicht aktiviert. In diesem Falle wird also die Steuerung des Transistors 230 über die Leitung 236 gemäß der Beaufschlagung des Eingangs 210 des Vergleichers 202 wirksam, der Transistor 230 erhält dann ein Steuersignal gemäß dem Ausgang 237 über den anderen Eingang 176 des OR-Glieds 175 entsprechend dem Vergleich des Spannungswerts am Sensor 217 entweder mit dem Spannungswert am Einsteller 212 im Falle des "reduzierten Betriebs" in der Betriebsart "Schaltuhrbetrieb" oder des Spannungswerts am Pol 220 im Falle der Betriebsart "Frostschutz".

Die Weiterleitung des Betriebszustandes auf der Leitung 173 zwischen dem Ausgang des NOR-Glieds 165 und dem Eingang 176 des OR-Glieds 175 wird indirekt durch eine Spannungsquelle mit gesteuertem Innenwiderstand durch den PNP-Transistor 440 in Serie mit dem Kollektor-441 und dem Emitter-Widerstand 442 und der Verbindungsleitung 218 bewirkt, wobei die Basiselektrode des PNP-Transistors 440 durch die Spannung auf der Leitung 173 über das Negationsglied 238 und den Widerstand 239 beaufschlagt wird. Wenn am Ausgang 172 ein "H"-Signal auftritt, liegt an der Basiselektrode des PNP-Transistors 440 ein Signal "L", dh. eine hohe Vorspannung gegenüber dem Emitter 443, so daß der PNP-Transistor 440 leitend wird und auf der Leitung 218 eine hohe Spannung auftritt, so daß das Leuchtanzeige-Element 444 ein Lichtsignal abgibt; diese Spannungsversorgung des Leuchtanzeige-Elements 444 kommt nicht zustande, wenn der PNP-Transistor 440 infolge einer Beaufschlagung mit einem "H"-Signal am Ausgang des Inverters 238, dh. einer kleinen Spannungsdifferenz zwischen Basiselekrode und Emitter 443 gesperrt ist.

Der Anschluß der Verbindungsleitung 218 an den Signaleingang 205 der Bedieneinheit 206 vermittelt also drei Funktionen, zum einen die Steuerung des Relais 231 über den Transistor 230 im Ausgang der Verknüpfungseinheit 184 gemäß dem Widerstandswert des Sensors 217 über den Anschluß 205 in der gezeichneten Stellung des Wechselschalters 211 im Vergleich zu dem Soll-Wert entsprechend der Reglerstellung 212 im Falle des Betriebszustandes "reduzierter Betrieb" jedoch über die Leitung 236 im Ausgang 237 des Vergleichers 202, die Stromversorgung des Leuchtanzeige-Elements 444 aus der Stromquelle über den Stromkreis 235 mit dem gesteuerten Innenwiderstand und unabhängig davon, die Steuerung des im Ausgang der Verknüpfungseinheit 184 liegenden Transistors 230 und des Relais 213 um den unteren Grenzwert der Temperatur für Frostschutz entsprechend dem Spannungsvergleich zwischen der Spannung der Verbindungsleitung 218 und dem Knotenpunkt 213 bei der gezeichneten Stellung der Wechselschalter 211 und 232 bei der Betriebsart "Frostschutz", wobei weder die Signale der Schaltuhr 105, noch die Kurzschließung der Verbindungsleitung 218 durch Betätigung des Tasters 228 einen Einfluß auf die Temperaturregelung haben.

Zu diesen drei Funktionen der Temperatursteuerungen in Betriebsart "Schaltuhr" mit den Betriebszuständen "Normalbetrieb" und "reduzierter Betrieb" einerseits und in der Betriebsart "Frostschutz" andererseits, somit für zwei Temperaturstufen zuzüglich der Betriebsart-Anzeige, kommt noch die bereits erwähnt Steuerungsfunktion der wahlweisen Umschaltung zwischen den Betriebszuständen "Normalbetrieb" und "reduzierter Betrieb" mittels des Drucktasters 228.

In Fig.3a und 3b sind für Teile eines Zeitabschnitts von mehr als einer Woche die Schaltzeiten eines ersten Kanals "A" 451 der Schaltuhr für zwei Klimazonen "C" 452 und "D" 453, sowie eines zweiten Kanals "W" 454 für Warmwasserbereiter und eines dritten Kanals "H" 455 für die Raumgruppe einer anderen Gebäudeeinheit in einem Diagramm eingetragen. In den mit "C" und "D" bezeichneten Zeilen für die beiden gleichnamigen Klimazonen sind die Zeitabschnitte aufgetragen, für welche die tatsächlichen Betriebszeiten gemäß der Betätigung der Bedieneinheiten, zB. 106 bzw. 460 und Schalterstellungen zB. 118, 112 der Auswertungsschaltungen gegenüber den Schaltzeiten der Schaltuhr 105 bzw. 467 (teilweise gemäß Fig.2a) verändert sind. Für die Ausführungsbeispiele Warmwasserbereiter 454 und für die Raumgruppe "H" einer anderen Gebäudeeinheit 455 sind die tatsächlich durch Betätigung der Schalter 120, 124 bzw. 121, 125 (Fig.2a) und Taster 228 (Fig. 2c) ausgewählten wahren Betriebszeiten der zugehörigen logischen Auswertungsschaltungen in Zeilen E 456 und F 457 gegenüber den Schaltzeiten gemäß Schaltuhrprogramm verändert wiedergegeben.

Zu jedem Diagramm der tatsächlich gewählten Schaltzeiten in Zeilen "C", "D", "E", "F" sind die im Ausgang $\overline{Q}$ (224 in Fig.2c) ohne Veränderung gemäß Schaltuhrprogramm in Zeile 461 ausgezogen gezeichnet und für die tatsächlichen Zeiten mit Veränderungen gemäß Tasterbetätigung in Zeile 461 schraffiert dargestellt zB. 478, 479 und - dem letzteren Diagramm entsprechend - die Betriebszeiten-Signale am Ausgang der betreffenden logischen Auswertungsschaltungen mit den Bezeichnungen "NB" dh. "Normalbetrieb" in dem Temperaturbereich der angenommenen Einstellung des Raum- oder Heizkörper-Thermostaten - schraffiert -, mit der Bezeichnung "RB", "reduzierter Betrieb", dh. für niedrigere Temperatur und mit der Bezeichnung "F", dh. für die Temperatur bei der Betriebsart "Frostschutz" eingetragen.

In dem gesamten Diagramm sind so eine große Zahl von möglichen unterschiedlichen Wahleinstellungen dargestellt. Bei 460 ist eine Betätigung des Tasters (228 in Fig.2c) zwecks Umschaltung der Heizung auf NACHT vor Ablauf der programmgemäßen Zeit angenommen, wodurch das Signal $\overline{Q}$ in der Zeile 461 nicht erst gemäß ausgezogen gezeichnetem Sprung 462, sondern schon an der Stelle 463 auftritt. Dementsprechend geht der Betriebszustand von dem Bereich der Normalheizung 464 bereits zum Zeitpunkt 465 auf den Betriebszustand "reduzierter Betrieb" 466 über. Der Normalbetrieb gemäß Programmabschnitt 467 mit Signal "$\overline{Q}$ = null" in dem Pausenabschnitt 468 bewirkt dann anschließend an der Stelle 469 einen Betriebszustand "Normalbetrieb".

An den Abschnitt 467 "Normalbetrieb" schließt sich gemäß voreingestelltem Programm der Pausenabschnitt 470 von Samstag abend bis Sonntag vormittag an, während dessen der Benützer durch Tasterbetätigung zu den Zeitpunkten 471 und 472 eine Umschaltung des Signals $\overline{Q}$ im Abschnitt 473 bewirkt und

somit eine "Normalbetriebs"-Phase 474 bewirkt. Noch während dieses Pausenabschnitts 470 wünscht der Benützer bereits vor dem Beginn des programmierten "Normalbetriebs"-Abschnitts zum Zeitpunkt 475 eine Einleitung dieses Betriebszustandes schon zum Zeitpunkt 476, aber auch zum Zeitpunkt 477 während des "Normalbetriebs"-Abschnitts 478 eine weitere Umschaltung, so daß nach dem Zeitabschnitt 478 des Signals $\overline{Q}$ für diesen eine Pause 479 und somit nach der Pause 480 des "Normalbetriebs"-Abschnitts ein gegen das voreingestellte Schaltuhrprogramm 475, 478 verschobener "Normalbetriebs"-Abschnitt 481 auftritt.

An sich lassen sich aus dem Diagramm die programmierten "Normalbetriebs"-Zeiten in der Zeile 482 die veränderten Zeiten und deren Drucktasten-Kommando-Zeiten zB. 483 (nach unten gerichtete kleine Pfeile auf der Zeile) dem Diagramm der Zeile 484 entnehmen, dementsprechend die programmierten $\overline{Q}$-Signalzeiten 485 (ausgezogen gezeichnet) und die tatsächlichen 486 (schraffiert) und schließlich die Einschaltzeiten für "Normalbetrieb" mit dem Regelbereich (schraffiert) gemäß Raumthermostat dem Diagramm 487, sowie in der Betriebsart "Frostschutz" der Zeile "F" 489.

An der Stelle des unterhalb der Zeile nach unten gerichteten dicken Pfeils 490 zeigt das hierfür übliche Symbol 490' die Umschaltung auf die Betriebsart "Frostschutz" an. Selbstverständlich wird hierdurch das Programm der Schaltuhr in Zeile 482 nicht beeinflußt, genausowenig der zeitliche Verlauf des Signals $\overline{Q}$ in der Zeile 485, sei es im Originalverlauf (ausgezogen gezeichnet) gemäß Schaltprogramm oder (wie schraffiert gezeichnet) dh. unverändert je nach dem zum Zeitpunkt des Pfeils 490 eingestellten Betriebszustand, wobei aber zu diesem Zeitpunkt des Pfeils 490 der Betriebszustand "reduzierter Betrieb" in die Betriebsart "Frostschutz" mit entsprechend ermäßigter Temperatur (Zeile 489) geändert wird.

Nach Ablauf dieses Zeitabschnitts, wie dargestellt Dienstag $14^{00}$ Uhr, der durch strichpunkierte Randlinien bezeichnet ist, laufen zunächst das Schaltuhr- Programm und die $\overline{Q}$-Signale weiter wie programmiert, jedoch ist bis zu dem Zeitpunkt des nach oben zeigenden Pfeils 491, in welchem die Betriebsart "Frostschutz" in die Betriebsart "Schaltuhrbetrieb" umgeschaltet wird, noch die Betriebsart "Frostschutz" 492 mit stark ermäßigter Temperatur mit einem Signal $\overline{Q}$ gemäß Schaltuhrprogramm erhalten, um dann in den bestehenden Betriebszustand "reduzierter Betrieb" gemäß Schaltuhr-Programm 493 überzuwechseln. Andererseits aber wird nach dem Ende des programmierten "Normalbetriebs" der Taster 228 als betätigt angenommen, so daß dann der "Normalbetrieb" einsetzt und die logische Auswertungsschaltung im Ausgang auf "Normalbetrieb" 494 mit Thermostat-Regelung übergeleitet wird.

Die scheinbar unübersehbare, aber in der Praxis klar unterscheidbare Vielfalt der praktischen Anwendungsfälle umfaßt bei genauer Betrachtung nur sechs unterschiedliche Varianten a) bis f) mit einer Untervariante g) (RB = "reduzierter Betrieb", NB = "Normalbetrieb"):

| | programmierter Betriebszustand | Ausgangssignal $\overline{Q}$ | Auswertungseinheit Ausgangssignal |
|---|---|---|---|
| a) | Anfangs RB | H | L |
| b) | 1 x Taster im RB | L | H bis Taster im folgenden NB |
| c) | während H Taster | H | L bis Ende des folgenden RB ($c_1$) bzw. bis Taster ($c_2$) |
| d) | Anfangs NB | L | H |
| e) | 1 x Taster | H | L bis Ende des folgenden RB, dort aber erneut Taster und Umschaltung in NB |
| f) | während L (Drucktaster übergeleitet) abermals Taster | L | H bis Ende des folgenden NB |
| g) | zum Ende NB (Übergang RB) abermals Taster | L | H bis Tasterbetätigung |

9

Wie schon erwähnt, können diese Betriebszustände in beliebiger Folge und unabhängig von dem ursprünglich programmierten Betriebszustand und für verschiedene Klimazonen, deren Auswertungseinheiten von einem Schaltuhrprogramm gesteuert werden, wiederholt werden.

Auch die "Frostschutz-Betriebs"-Schaltung kann für verschieden programmierte Auswertungsschaltungen wahlweise einzeln oder gemeinsam in Gruppen betätigt werden, sei es lediglich durch gleichzeitige Betätigung der betreffenden Schalter oder von vornehrein durch eine mechanische Kupplung derselben. Die unabhängige Betätigung der "Frostschutz-Betriebs"-Schaltung ist in Fig.3a bzw. 3b bei den Beispielen der Klimazone "C" und der Zeilen "E" und "F" an der Stelle zwischen Dienstag und Freitag angewandt, die unabhängige Betätigung für Klimazone "D" im Beispiel des Zeitabschnitts im Laufe des Montags, diejenige für Raumgruppe H in Zeile "F" im Zeitabschnitt Samstag ab 14$^{00}$ Uhr bis Sonntag 20$^{00}$ Uhr. Für die sechs Varianten der Betriebszustände sind Beispiele a) bis f) bzw. g) in Fig.3a und 3b mit diesen Bezeichnungen markiert.

In Fig.4 ist ein ausführliches Schaltbild einer der in Fig.2a schematisch dargestellten logischen Auswertungsschaltungen (101, 102, 110, 114) des Steuer- und Regelgeräts mit einer der zugehöriger Bedieneinheiten (106, 107, 112, 116) in Verbindung mit Details des Ausgangskreises 153 wiedergegeben, wobei anstelle der Bedieneinheit 206 (Fig.2c) eine Variante 501 und anstelle des Stromkreises 235 mit gesteuertem Innenwiderstand (Fig.2c) derjenige 502 als äquivalente Variante, ebenfalls mit einem PNP-Transistor 503, dessen Kollektor- und Emitter-Strecke durch den Widerstand 504 überbrückt ist, mit Kollektorwiderstand 505 und Emitter-Widerstand 506 eingesetzt ist, dessen Basiselektrode 507 von der Verbindungsleitung 173 zwischen dem Ausgang 172 des NOR-Gliedes 165 und einem Eingang 174 des OR-Gliedes 175 über die Leitung 509 und den Inverter 238 und den Vorwiderstand 239 beaufschlagt ist. Im übrigen ist die Schaltung, zusammengesetzt aus Verknüpfungseinheit 161, 164 und 184 (hier zeichnerisch nicht trennbar), gleich aufgebaut wie in Fig.2c.

Im Interesse einer besseren Verständlichkeit sind die Einzelheiten der Fig.2c in Fig.4 lediglich im Zusammenhang mit dem Ausgangskreis und anderen Teilen in übersichtlicherer Form wiederholt, um so die Anschlüsse der Schaltuhr (105 in Fig.2a) an die Setz- (225) und Rüchsetz-Eingänge (226 in Fig.2c) beschreiben zu können. Das Signal am "EIN"-Ausgang 510 (Setzausgang) der Schaltuhr 105 wird über die Impulsformergruppe 512, die beiden Inverter der Gruppe 513 zu dem Setzeingang 225 des FLIP-FLOP-Bausteins 222 geleitet, dessen $\overline{Q}$-Signal am Ausgang 224 mit dem Eingang 227 des NOR-Gliedes 165 verbunden ist.

Ein Ausgangssignal am "AUS"-Anschluß 515 der elektronichen Schaltuhr 105 bewirkt über den Transistor 511, den einen Eingang 516 des ODER-Gliedes 517 und den Rücksetzeingang 226 ein "H"-Signal am $\overline{Q}$-Ausgang 224 und weiterhin über den einen Eingang 227 des NOR-Gliedes 165 ein "L"-Signal am Ausgang 172 des NOR-Gliedes 165 und am Eingang 174 des OR-Gliedes 175, so daß dessen Ausgangssignal am Punkt 517 ausschließlich durch das Signal an seinem anderen Eingang 176 bestimmt ist und damit auch der Schaltzustand des Transistors 230 und des Relais 231; somit ist also dann der Normalbetrieb der Heizungsanlage (Regelung über die Raum- bzw. die Heizkörperthermostate) ausgeschaltet und befindet sich die Anlage im "reduzierten Betrieb".

Wie in der bereits beschriebenen Fig.2c mit der Verknüpfungseinheit 161 werden in der Fig.4 durch den Operations-Verstärker 521 die Spannung auf der Verbindungsleitung 218 und die Bezugsspannung am Knotenpunkt 208 des Spannungsteilers 209 verglichen; das Ergebnissignal hiervon am Ausgang 223, das nur bei Betätigung des Tasters 228 auftritt, liegt am CLOCK-Eingang (Cl) 221 des FLIP-FLOP-Gliedes 222 und wird - vorausgesetzt, daß der Wechselschalter 169 auf den Pol 170 gestellt ist - für die Umpolung des Signals $\overline{Q}$ am Ausgang 224 des FLIP-FLOP-Glieds 222 von einem gegebenen Wert (zB. "L") in den entgegengesetzten (zB. "H") bie Kurzschließung des Signals am Anschluß 205 der Bedienungseinheit 501 durch ein Signal am CLOCK-Eingang 221 verwertet, wobei der Wert im Ausgangskreis der Auswertungs-Schaltung und damit der Betriebszustand der Heizungsanlage im angenommenen Beispiel von "reduzierter Betrieb" auf "Normalbetrieb" umgeschaltet wird. Die Funktion der ersten Verknüpfungseinheit (161) besteht also in der Verknüpfung des Ausgangssignals (0) des Betätigungsglieds am CLOCK-(Cl)Eingang (221) mit dem Ausgangssignal der Schaltuhr 105 an den Setz- bzw. Rücksetz-Eingang (225)/226) des FLIP-FLOP-Glieds 222 in dem Sinne eines Austauschs der entsprechenden $\overline{Q}$-Signale im Ausgang 224 und damit über die weiteren Verknüpfungseinheiten auch des Ausgangssignals im Ausgangskreis (230/231) der Auswertungsschaltung entsprechend dem einen Betriebszustand "reduzierter Betrieb" in den anderen "Normalbetrieb" und umgekehrt.

Ist der Wechselschalter 169 auf den " + "-Pol 171 der Leitung 542 umgelegt, dann ist durch diese positive Spannung auf der Leitung 523 und an dem Eingang 168 (Fig.2b) des NOR-Gliedes 165 dessen Ausgangssignal auf "L" und somit der Ausgangskreis der Auswertungs-Schaltung für die Steuerung durch Schaltuhr-Signale an den Eingängen 225/226 im "Normalbetrieb" (SOLL-Wert gemäß Raum- bzw. Geräte-Thermostaten) oder die Umsteuerung durch den Taster 228 gesperrt. Die Verknüpfungseinheit 164 dient der Umschaltung der Betriebsart "Schaltuhr-Betrieb" auf die Betriebsart "Frostschutz" mittels des einen Umschalters 169 in Verbindung mit der Verknüpfungseinheit 184 durch den Umschalter 211 und zwar im Falle des Betriebszustandes "reduzierter Betrieb" der Betriebsart "Schaltuhr-Betrieb" in der einen Einstellung des SOLL-Werts für diesen und durch die andere Einstellung des Umschalters 211 auf den SOLL-Wert für die Betriebsart "Frostschutz".

Die Entscheidung zwischen diesen beiden Betriebsarten wird in der Verknüpfungseinheit 184 durch den Umschalter 211 herbeigeführt, durch den der eine Eingang des Operationsverstärkers 524 zwischen der Bezugsspannung für den Betriebszustand "reduzierter Betrieb" der Betriebsart "Schaltuhr-Betrieb" - Umschalter 211 auf Pol 219 - und der Bezugsspannung für die Betriebsart "Frostschutz" - Umschalter 211 auf Pol 220 - umschaltbar ist, so daß das Ausgangssignal der Auswertungsschaltung durch den Vergleich der Spannung auf der Verbindungsleitung 218, dh. an dem temperaturabhängigen Widerstand 217 (Sensor) in der Bedieneinheit 501, mit einer der vorerwähnten Bezugsspannungen in dem Operationsverstärker 524 für die Regelung der Temperatur gemäß Betriebsart "Schaltuhr-Betrieb" mit dem "reduzierten Betrieb" bzw. gemäß Betriebsart "Frostschutz" umgeschaltet und eingestellt wird. Eine Rückkehr in die Steuerung gemäß den beiden Betriebszuständen der Betriebsart "Schaltuhr-Betrieb" (TAG- und NACHT-Betrieb bzw. Absenkung) ist nur bei Rücklegung des Umschalters 169 in die Stellung 170 (zusammen mit dem Umschalter 211 in die Stellung 219) möglich.

Aus dieser Gegenüberstellung der Betriebszustände bzw. der Betriebsarten ergibt sich der Zusammenhang zwischen den Verknüpfungen von SOLL-Temperatur-Regelungen mithilfe der Verknüpfungseinheiten. Die logischen Auswertungs-Schaltungen ermöglichen, wie man erkennt, darüberhinaus die Verknüpfung der Umschaltung der Betriebszustände der Schaltuhr-Betriebsart mittels des Drucktasters 228, sowie weiterhin zusätzlich eine Anzeige des Betriebszustandes "Normalbetrieb" mittels des Signals ("H") auf der Leitung 173 über den Stromkreis 502 mit steuerbarem Widerstand. Hierfür ist im Ausführungsbeispiel der Fig.4 in der Bedieneinheit 501 eine Serienschaltung aus Zener-Dioden 525, 526 und Lampe 527 eingesetzt.

Wenn nach einem Netzausfall die Spannung vor dem RC-Glied 530 wiederkehrt, wird dabei an seinem Knotenpunkt 531 ein positver Impuls erzeugt, der über die Inverter 532 und 533 auf die Bedingungsleitung 534 geführt wird. Diese Bedingungsleitung 534 liegt an dem zweiten Eingang 535 des OR-Gliedes 517 und ist gegebenenfalls mit der Zuleitung 536 mit dem zweiten Eingang des korrespondierenden OR-Gliedes einer nicht dargestellten, im übrigen aber gleich aufgebauten Verknüpfungseinheit verbunden, die in entsprechender Weise an eine Bedieneinheit für eine zweite Klimazone angeschlossen ist.

Es liegt im Rahmen der vorbeschriebenen Besonderheiten, daß für den gleichen Zweck der Kopplung von Steuerungsteilen mehrerer Raumzonen durch Verbinden der jeweiligen Eingänge der NOR-Glieder 165 der Verknüpfungseinheiten mit Hilfe dieser zugeordneten und mechanisch mit dem Schalter 169 gekoppelten ung gleichartig wie dieser beschaltete Schalter erfolgen kann. Mit einer derartigen Anordnung des dem Schalter 169 entsprechenden nicht-gekoppelten Schalters ist es möglich, den Frostschutz für einzelne Zonen getrennt zu schalten. Zum Beispiel läßt sich dann die Heizungsanlage in einem Mehrfamilienhaus für die eine Wohnung im Frostschutzbetrieb betrieben, die übrigen Wohnungen mit ihren ihnen zugeordneten Klimazonen dagegen entsprechend dem Schaltuhrprogramm im Normal- bzw. reduzierten Betrieb und gegebenenfalls modifiziert je nach Betätigung der Bedieneinheit.

Weiterhin liegt es im Rahmen der Erfindung, anstelle des beschriebenen Schalters 169 ein elektronisches Schaltglied der Gruppe äquivalenten Kombinationen, wie sie einem auf diesem Spezialgebiet tätigenDurchschnittsfachmann als üblich und naheliegend geläufig sind, zB. einen Komparator, eine Gatteranordnung oder eine Transistorschaltung mit entsprechender Funktion einzusetzen, wobei zB der invertierende Eingang eines weiteren als Komparator verwendeten Operationsverstärkers mit dem Abgriff eines Spannungsteilers aus zwei angepaßt bemessenen Widerständen, sein nicht-invertierender Eingang mit dem Anschluß des Schalters 211, der dem invertierenden Eingang des Operationsverstärkers 524 zugeführt ist, verbungen wird. Das Ausgangssignal des vorgenannten Komparatorswird dem Eingang 168 des NOR-Gliedes 165 zugeführt und der Schalter 211 kann entfallen.

In Fig.5 (a) ist die Schaltung einer ersten Variante (202) der Bedieneinheit entsprechend Fig.2c allein wiedergegeben, in welcher zwischen den zu den Anschlüssen 205 und 518 führenden Leitungen 519 und 520 als Temperaturfühler 217 (bzw. Sensor) ein Widerstand mit negativem Temperatur-Koeffizienten (NTC-Widerstand), der Drucktaster 228 und über den Gleichrichter 521 die Serienschaltung aus Diode 522 (Zenerdiode) und Leuchtdiode 444 zu deren Betrieb mit einer Spannung oberhalb einer Spannungsschwelle angeschlossen sind, unterhalb welcher der Leuchtbetrieb nicht herbeigeführt werden kann. Mit dem Gleichrichter 521 ist dafür gesorgt, daß die Serienschaltung aus Leuchtdiode 444 und Diode 522 nicht falsch gepolt betrieben werden kann. Dadurch wird gewährleistet, daß die Anschluß-Montage der Bedieneinheit an das Steuer-und Regelgerät bzw. die zugehörige Zuleitung in einfacher Weise, dh. auch ohne Zuhilfenahme von Meßgeräten, mit richtiger Polung möglich ist. Eine zweite Variante 501 dieser Bedieneinheit ist in Verbindung mit Fig.4 beschrieben; da die Funktion in beiden Fällen die gleiche ist, kann die detaillierte Beschreibung der Schaltungsanordnung der Bedieneinheit auf die erste Variante (206) beschränkt bleiben.

Die Schaltungsanordnung dieser Bedieneinheit 206 ermöglicht es, daß durch Beaufschlagung des Anschlusses 205 aus einer Spannungsquelle, zB. einem Stromkreis 502 mit steuerbarem Widerstand 541 (gegen den Anschluß 540 und damit Spannung null) über den Gesamtwiderstand 541 auf dieser Leitung zum Anschluß 205 drei Betriebsspannungen einstellbar sind,

nämlich im ersten Fall die Spannung null durch Betätigen des Drucktasters 228,

eine positive Spannung an dem Abgriff der Klemme 205 des Spannungsteilers, der aus dem Sensor-Widerstand 217 (NTC-Widerstand) und dem steuerbaren Widerstand 541 gebildet ist, und deren Höhe durch das Teilungsverhältnis und die Speisespannung 542 bestimmt ist,

wobei die genannte positive Spannung im zweiten Falle der Zweipunktregelung der Temperatur der betreffenden Klimazone oder des betreffenden Warmwasserbereiters auf den Niveaus des Betriebszustandes "reduzierter Betrieb" der Betriebsart "Schaltuhrbetrieb" gemäß der vorgegebenen programmkonformen Steuerung bzw. der Betriebsart "Frostschutz" durch den temperaturabhängigen Widerstand 217 niedriger ist als die Zenerspannung der Zenerdiode 522,

und im dritten Fall der vorgegebenen programmkonformen Steuerung gemäß dem Betriebszustand "Normalbetrieb" (EIN) wegen des Signals "H" im Ausgang 174 des NAND-Glieds 165 und damit des leitend geschalteten Stromkreises 502 mit steuerbarem Innenwiderstand 541 höher ist als die Zenerspannung der Zenerdiode 522 und somit die Betriebs-Ansteuerung der Leuchtanzeige herbeiführt und über die den in der betreffenden Klimazone usw. an den Heizkörpern angebrachten bzw. diesen zugeordneten raumthermostaten usw. die regelung der Raumtemperazur freigibt.

In Verbindung mit dem Stromkreis 502 (Fig.4), der hinter der Versorgungsspannung 542 eine Spannungsquelle mit steuerbarem Innenwiderstand 541 abgibt, und dem Schalter 228 ist es weiterhin möglich, an den Ausgängen zweier Operationsverstärker 521 (210), 525 (202) mit Eingängen 203, 204 entgegengesetzter Polung entsprechend den Temperaturbedingungen Signale mit dem Wert "L" bzw. "H", und zwar wechselweise, herbeizuführen. Mit diesen Impulsen können somit in einfacher Weise getrennte Schaltungsteile des Steuer- und Regelgeräts in verschiedener Weise gesteuert werden.

Das Ausführungsbeispiel in Fig.5 (b) ist in besonderer Ausbildung statt als bewegliche Einheit mit zweipoligem Kabelanschluß nach Art eines Unterputzgeräts, zB. für ein Installationsgeräte-Flächenprogramm, in Kombination mit Lichtschaltern, Steckdosen und anderem derartigen Installationsmaterial ausgebildet zur Montage mittelbar in einem Halterahmen eingesetzt ist, der mit einem Trägerring fest verbunden ist, der entweder mit Spreizkrallen oder mit Öffnungen für Schraubbefestigung in einer genormten Unterputzdose versehen ist, oder mittelbar mit dem erwähnten Halterahmen mittels an der Abdeckplatte 561 seitlich einstückig angeformter Schnappnasen 563, 564 in dem Trägerring bzw. unmittelbar in der Unterputzdose selbst lösbar befestigt ist.

An der Abdeckplatte 561 ist der Schutzkäfig 565 mit Distanz-Säulen 566 angeordnet, in dessen Innenraum der Temperaturfühler (Sensor) 567 für die Umgebungsluft zugänglich untergebracht ist. Weiterhin sind der Betätigungsknopf 568 für den Drucktaster und die Leuchtdiode 569 in der Abdeckplatte 561, die zugleich Frontplatte ist, sichtbar und zugänglich und die zugehörigen Bauelemente und Anschlußmittel (zB. Klemmen für Anschlüsse 518, 205) auf der mittels Schnappbefestigungs-Mitteln od dgl. an der Unterseite des Gehäuses gehaltenen Leiterplatte 562 angeordnet montiert.

## Patentansprüche

1. Elektrisches Steuer- und Regelgerät als Zusatz zu einer Heizungsregalanlage mit zwei oder mehreren Raumzonen (C, D), in denen die Raum-Temperatur bei einer ersten Betriebsart "Normalbetrieb" über Thermostate an den Heizkörpern (1, 2, 4, 6, 10 - 14) geregelt wird,

wobei das zusätzliche Steuer- und Regelgerät eine Schaltuhr (105) mit zwei oder mehreren voneinander unabhängig einstellbaren, jeweils nur einer Raumzone zugeordneten Schaltkanälen enthält,
dadurch gekennzeichnet,
daß es für jeden Schaltkanal eine Auswertungsschaltung (101, 102, 110, 114) sowie einen Sollwert-Einsteller (212) für eine zweite Betriebsart 'reduzierter Betrieb' und in jeder Raumzone ein Bediengerät (21, 22, 206) aufweist, welches Bediengerät über eine Zweidrahtleitung (519, 520) mit der zugehörigen Auswertungsschaltung verbunden ist,
daß jedes Bediengerät (21, 22, 206) einen Temperaturfühler (108, 109, 113, 117, 217), einen Drucktaster (228, 568) und ein Leuchtanzeige-Element (444, 527, 569) enthält

daß in der zweiten Betriebsart "reduzierter Betrieb" und in einer dritten Betriebsart "Frostschutz" die Raumtemperatur der jeweiligen Raumzone mit dem Temperaturfühler des zugeordneten Bediengerätes geregelt wird,

daß nur in der Betriebsart "Normalbetrieb" das Leuchtzeige-Element (444, 527, 569) jedes Bediengerätes leuchtet,

daß bei Betätigung des Drucktasters (228, 568) des Bediengeräts (21, 22, 206) einer Raumzone von der einen Betriebsart, z.B. "Normalbetrieb", in die andere Betriebsart, z.B. "reduzierter Betrieb", bzw. in umgekehrter Reihenfolge umgeschaltet wird

und daß in der dritten Betriebsart 'Frostschutz' alle Raumzonen gemeinsam auf einen vorgegebenen Mindesttemperaturwert geregelt werden.

2. Elektrisches Steuer- und Regelgerät nach Anspruch 1,
dadurch gekennzeichnet, daß es mindestens eine logische Auswertungsschaltung (101, 102, 110, 114) enthält für Steuersignale einschließlich der Ausgangssignale (151, 152) der Schaltuhr (105) und als weitere logische Auswertungsschaltung eine Kaskadengruppe zusammengestellt aus einer ersten (161), einer zweiten (164) und einer weiteren Verknüpfungseinheit (184) mit Verzweigungen und Schnittstellen (161', 173, 176),

(a) wobei die Schnittstelle mit dem Ausgang (167) der ersten Verknüpfungseinheit (161, 221) und dem Eingang (166) eines NOR-Glieds (165) mit einem ersten Umschalter (169) verbunden ist,

(b) wobei die Schnittstelle der zweiten Verknüpfungseinheit (164) mit dem NOR-Glied (165) verbunden ist, dessen einer Eingang (166) mit dem Ausgang (167) der ersten Verknüpfungseinheit und dessen zweiter Eingang (168) mit Umschaltbarkeit durch den ersten Umschalter (169) zwischen "Schaltuhr-Betrieb" (232) und "Frostschutzbetrieb" (234) verknüpft ist,

(c) wobei eine weitere Schnittstelle der dritten Verknüpfungseinheit (184) mit Leitungen (173, 183) und mit zwei Eingängen (174, 176) eines OR-Glieds (175) mit einer zugeordneten Bedieneinheit (206) verbunden ist und

(d) wobei als weitere Schnittstelle für einen zweiten Umschalter (179, 211) zwischen "reduziertem Betrieb" (219) und "Frostschutz" (220) über das OR-Glied (175) verbunden ist (Fig. 2b und 2c).

3. Steuer- und Regelgerät nach Anspruch 2,
dadurch gekennzeichnet,
daß die erste Verknüpfungseinheit einen Flip-Flop-Baustein (222) enthält, wobei dessen mit der zweiten Verknüpfungseinheit (164) verbundene "$\overline{Q}$"-Ausgang (167) durch Betätigung des Drucktasters (228) über ein Steuersignal an dem CLOCK-Eingang (221) des Flip-Flop-Bausteins (222) aus jedem seiner Betriebszustände ("H", "L") in den jeweils anderen ("L", "H") umschaltbar ist und wobei über dessen Setz-Eingang (225) bzw. Rücksetz- Eingang (226) mit den Ausgangssignalen (151) der Schaltuhr (105) verknüpft ist.

4. Steuer- und Regelgerät nach Anspruch 3,
dadurch gekennzeichnet,
daß durch den Ausgang eines vorgeordneten Verknüpfungsglieds (z.B. 164) an einem anderen Eingang (176) desselben über einen als Vergleicher dienenden Operationsverstärker (202) als zwischenbeschaltetes logisches Bauelement der zweite Umschalter (211) betätigbar ist.

5. Steuer- und Regelgerät nach einem der Ansprüche 1 bis 4,
dadurch gekennzeichnet,
daß die Stromquelle (235) mit steuerbarem Innenwiderstand als Transistorstromkreis, vorzugsweise mit einem Transistor vom PNP-Typ ausgebildet ist, dessen Basis-Elektrode (440) über ein Inversionsglied (238) an den Ausgang (173) der Schnittstelle der obengenannten zweiten Verknüpfungseinheit (164), dessen Emitter-Elektrode (443) über einen zugehörigen Widerstand an den positiven Pol (216) der Stromquelle und dessen Kollektor-Elektrode über den zugehörigen Widerstand (441) unter Überbrückung der Transistor-Strecke durch einen festen Widerstand an die Einrichtung, z.B. ein Leuchtanzeige-Element (444) zur Anzeige des Betriebszustandes der Anlage angeschlossen sind.

6. Steuer- und Regelgerät nach einem der Ansprüche 1 bis 5,
dadurch gekennzeichnet,
daß der zweite Umschalter (169, 211) seiner Verknüpfungseinheit (184) über einen als zusätzliche Verknüpfungsglied dienenden Operationsverstärker (202) zugeordnet ist, dessen erster Eingang (204) über ihn (169, 211) wahlweise mit einer Bezugsspannung entsprechend der SOLL-Temperatur bei "reduziertem Betrieb" (219) oder bei derjenigen bei Betriebsart "Frostschutz" (220) und dessen zweiter Eingang mit dem Ausgangssignal des Temperaturfühlers (217) beaufschlagt ist.

**7.** Steuer- und Regelgerät nach einem der Ansprüche 1 bis 6,
dadurch gekennzeichnet,
daß mindestens zwei der zu den Ausgängen von a) Betätigungselement (Drucktaster 228), b) zweiter Umschalter (169") und e) Stromquelle mit steuerbarem Innenwiderstand 235 gehörenden Verknüpfungseinheiten eingangsseitig in eine Leitung (218) zu dem Anschluß eines in einem von dem eigentlichen Steuer- und Regelgerät räumlich getrennten Gehäuse eingebauten Bediengeräts (206) zusammengefaßt sind, so daß diese Leitung an den Eingang mindestens eines der als Vergleicher dienenden Operationsverstärker (201, 202) und gegebenenfalls den Ausgang der Stromquelle (235) mit steuerbarem Innenwiderstand bzw. an einen Eingang (204) des der nochmaligen weiteren Verknüpfungseinheit vorgeschalteten logischen Bauelements angeschlossen ist.

**8.** Steuer- und Regelgerät nach Anspruch 7,
dadurch gekennzeichnet,
daß in der Bedieneinheit dem Temperaturfühler (217) in Parallelschaltung ein Drucktaster (228) zugeordnet ist, durch dessen Betätigung das Ausgangssignal der Verknüpfungseinheit (161) und damit dasjenige der daran angeschlossenen Verknüpfungseinheiten bei deren Freigabe im Ausgangskreis des Erregungskreises (230, 231) das diesem zugeordnete elektromechanische bzw. elektrische Schaltelement vom AUS- In den EIN-Betriebszustand und umgekehrt schaltbar sind.

**9.** Steuer- und Regelgerät nach Anspruch 7 und 8,
gekennzeichnet durch eine Parallelschaltung von Taster (228), Sensor (217) und als Anzeigeelement dienender Leuchtdiode (444) in der Bedieneinheit (206) mit zweipoliger Leitung im Eingang (205, 520) des Steuer- und Regelgeräts.

**10.** Steuer- und Regelgerät nach einem der Ansprüche 7 bis 9,
dadurch gekennzeichnet, daß die Bedieneinheit mit zweipoligem Anschluß in einem Aufputz- bzw. Unterputzgehäuse z.B. für ein Installationsgeräte-Flächenprogramm, wahlweise in Kombination mit Lichtschaltern, Steckdosen und anderem derartigen Installationsmaterial zur Montage mittelbar in einem Halterahmen eingesetzt ist, der mit einem Trägerring fest verbunden ist, der entweder mit Spreizkrallen oder Öffnungen zur Schraubbefestigung in einer genormten Unterputzdose versehen ist, oder mittelbar mit dem erwähnten Halterahmen mittels an der Abdeckplatte (561) seitlich einstückig angeformter Schnappnasen (563, 564) in dem Trägerring bzw. unmittelbar in der Unterputzdose selbst lösbar befestigt ist.

**11.** Steuer- und Regelgerät nach Anspruch 10,
dadurch gekennzeichnet, daß auf einer Abdeckplatte (561) ein Schutzkäfig (565) mit Distanzsäulen (566), in dessen Innenraum der Temperaturfühler (Sensor 567) für die Umgebungsluft zugänglich untergebracht ist, der Betätigungsknopf (568) für den Drucktaster und die Leuchtdiode (569) sichtbar und zugänglich untergebracht und die zugehörigen Bauelemente und Anschlußmittel,z.B. Klemmen für Anschlüsse (518, 205), auf einer mittels Schnappbefestigungs-Mitteln od.dgl. an der Unterseite des Gehäuses gehaltenen Leiterplatte (562) angeordnet montiert sind.

**Claims**

**1.** Electrical controller as an extension to a heating control system having two or more room zones (C, D) in which under a first "normal service" operating option the room temperature is controlled via thermostats on the heaters (1, 2, 4, 6, 10 - 14),
the additional controller containing a time switch (105) having two or more switching channels which are adjustable independently of one another yet are each assigned to one room zone only,
characterised in that:
for each switching channel it incorporates an evaluation circuit (101, 102, 110, 114) and a setpoint adjuster (212) for a second "reduced service" operating option and in each room zone an operating unit (21, 22, 206), which operating unit is connected via a two-wire cable (519, 520) to the associated evaluation circuit,

14

each operating unit (21, 22, 206) contains a temperature sensor (108, 109, 113, 117, 217), a pushbutton (228, 568) and an illuminated display element (444, 527, 569),

in the second "reduced service" operating option and in a third "frost control" operating option the room temperature of the respective room zone is controlled by the temperature sensor of the associated operating unit,

only in the "normal service" operating option is the illuminated display element (444, 527, 569) of each operating unit illuminated,

operating the pushbutton (228, 568) of the operating unit (21, 22, 206) of a room zone switches over from one operating option, e.g. "normal service", to the other operating option, e.g. "reduced service", or vice versa,

and in the third "frost control" operating option all the room zones are jointly controlled to a preset minimum temperature level.

2. Electrical controller according to claim 1,
characterised in that it contains at least one logic evaluation circuit (101, 102, 110, 114) for control signals including the output signals (151, 152) of the time switch (105) and as an additional logic evaluation circuit a cascade assembly made up of a first (161), a second (164) and an additional logic unit (184) with junctions and interfaces (161', 173, 176),

(a) the interface being connected to the output (167) of the first logic unit (161, 221) and the input (166) of a NOR gate (165) to a first changeover switch (169),

(b) the interface of the second logic unit (164) being connected to the NOR gate (165), one input (166) of which is combined with the output (167) of the first logic unit and the second input (168) of which is combined switchably through the first changeover switch (169) between "time switch operation" (232) and "frost control operation" (234),

(c) an additional interface of the third logic unit (184) with cables (173, 183) and with two inputs (174, 176) of an OR gate (175) being connected to an associated operating unit (206) and

(d) being connected as a further interface for a second changeover switch (179, 211) between "reduced service" (219) and "frost control" (220) via the OR gate (175) (Figs. 2b and 2c).

3. Controller according to claim 2,
characterised in that the first logic unit contains a flip-flop module (222), of which the "Q" output (167) connected to the second logic unit (164) can be switched over by operating the pushbutton (228) via a control signal at the CLOCK input (221) of the flip-flop module (222) from either of its operating states ("H", "L") into the respective other one ("L", "H") and of which the set input (225) and reset input (226) are combined with the output signals (151) of the time switch (105).

4. Controller according to claim 3,
characterised in that the second changeover switch (211) can be operated as an intermediate logic component through the output of an upstream logic gate (e.g. 164) at another input (176) thereof via an operational amplifier (202) acting as a comparator.

5. Controller according to one of claims 1 to 4,
characterised in that the current source (235) is designed with controllable internal resistance as a transistor circuit, preferably with a PNP-type transistor, the base electrode (440) of which is linked via an inverter (238) to the output (173) of the interface of the aforesaid second logic unit (164), the emitter electrode (443) of which is linked via an associated resistor to the positive pole (216) of the current source, and the collector electrode of which is linked, via the associated resistor (441) and bridging the transistor section by means of a fixed resistance, to the device, e.g. an illuminated display element (444) for displaying the system's operating state.

6. Controller according to any of claims 1 to 5,
characterised in that the second changeover switch (169, 211) is associated with its logic unit (184) via an operational amplifier (202) acting as an additional logic gate, the first input (204) of said amplifier (202) selectively receiving via said switch (169, 211) a reference voltage corresponding to the nominal temperature under "reduced service" (219) or to that under the "frost control" operating option (220), and the second input of which receives the output signal from the temperature sensor (217).

15

**7.** Controller according to any of claims 1 to 6, characterised in that at least two of the logic units belonging to the outputs of a) the actuator (pushbutton 228), b) the second changeover switch (169") and e) the current source with its controllable internal resistance 235 are combined on the input side into a cable (218) to the terminal of an operating device (206) installed in a housing spatially separate from the controller proper, with the result that this cable is linked to the input of at least one of the operational amplifiers (201, 202) acting as comparators and, if appropriate, to the output of the current source (235) with its controllable internal resistance and/or to an input (204) of the logic component connected on the line side of the other additional logic unit.

**8.** Controller according to claim 7, characterised in that in the operating unit a pushbutton (228) is associated with the temperature sensor (217) and connected in parallel therewith, the actuation of said pushbutton enabling the output signal of the logic unit (161) and hence that of the logic units linked thereto the electromechanical or electrical switching element associated with said input circuit (203, 231) to be switched from the OFF to the ON operating state and vice versa when said logic units are cleared in the output circuit of said input circuit (230, 231).

**9.** Controller according to claims 7 and 8, characterised by a parallel circuit comprising a button (228), sensor (217) and light-emitting diode (444) acting as a display element in the operating unit (206) with two-pole cable in the input (205, 520) of the controller.

**10.** Controller according to any of claims 7 to 9, characterised in that the operating unit is employed with a two-pole connector in a surface-type or flush-type housing, e.g. for a large-scale program for wiring accessories, selectively in combination with light switches, socket outlets and other such installation material for assembly indirectly in a retaining frame permanently joined to a carrier ring which is either provided with claws or openings for screw fixing in a standard flush-type box, or is fixed in self-detaching manner in the carrier ring or else directly in the flush-type box indirectly with said retaining frame by means of snap-fit lugs (563, 564) integrally moulded on the sides of a cover plate (561).

**11.** Controller according to claim 10, characterised in that on a cover plate (561) a protective cage (565) with distance sleeves (566), in the interior of which cage is housed the temperature sensor (sensor 567) so as to be accessible for the ambient air, the operating knob (568) for the pushbutton and the light-emitting diode (569) are visibly and accessibly housed and the associated components and connection means, e.g. terminals for connections (518, 205), are mounted on a printed circuit board (562) held on the underside of the housing by means of snap-action fittings or similar.

**Revendications**

**1.** Appareil de réglage et de commande électrique supplémentaire pour une installation de régulation de chauffage pour deux ou plusieurs zones d'habitation (C, D), dans lesquelles la température ambiante est réglée en service "Températue normale" à l'aide de thermostats installés sur les radiateurs (1, 2, 4, 6, 10 à 14), l'appareil de réglage et de commande supplémentaire comprenant un inter horaire (105) avec deux ou plusieurs canaux de commutation, réglables indépendemment les uns des autres et affectés, respectivement, à une seule zone, caractérisé par le fait qu il présente, pour chaque canal de commutation un circuit d'évaluation (101, 102, 110, 114) ainsi qu'un régleur de valeur de consiqne (212) pour un deuxième état de service, à savoir: "Température réduite" et, dans chaque zone, un appareil de commande (21, 22, 206), qui est relié au circuit d'évaluation correspondant, par l'intermédiaire d'une ligne conductrice à deux fils (519, 520), que chaque appareil de commande (21, 22, 206) est pourvu d'une sonde de température (108, 109, 113, 117, 217), d'un bouton-poussoir (228, 568) et d'un élément d'affichage luminescent (444, 527, 569), que, dans le deuxième état de service, "Température réduite", et dans un troisième mode de service "Hors gel", la température ambiante de la zone respective est réglée à l'aide de la sonde de température de l'appareil de commande correspondant,

que l'élément d'affichage luminescent (444, 527, 569) de chaque appareil de commande ne s'allume qu'en mode de service "Température normale",

que l'actionnement du bouton-poussoir (228, 568) de l'appareil de commande (21, 22, 206) d'une zone permet de passer d'un état de service, par exemple: "Température normale", à un autre, par exemple: "Température réduite" et inversement, et

que, dans le troisième mode de service "Hors gel", la température de toutes les zones est réglée à une température minimale prédéfinie.

2. Appareil de réglage et de commande électrique selon revendication 1,
caractérisé par le fait
qu il comprend au moins un circuit d'évaluation logique (101, 102, 110, 114) pour signaux de commande, y compris signaux de sortie (151, 152) de l'inter horaire (105) et, en tant qu'autre circuit d'évaluation logique, un groupe en cascade composé d'unités d'interconnexion, en l'occurence: une première (161), une seconde (164) et une troisième (184), avec branchements et interfaces (161', 173, 176),

(a) l'interface étant relié à la sortie (167) de la première unité d'interconnexion (161, 221) et la sortie (166) d'un élément NOR (165), avec un premier commutateur (169);

(b) l'interface de la deuxième unité d'interconnexion (164) étant reliée à l'élément NOR (165), dont une entrée (166) est enchaînée à la sortie (167) de la première unité d'interconnexion et la deuxième entrée est commutable, à l'aide du premier commutateur (169), entre service "Inter horaire" (232) et "Hors gel" (234);

(c) une autre interface de la troisième unité d'interconnexion (184) étant reliée, avec des lignes conductrices (173, 183) et deux entrées (174, 176) d'un élément OU (175), à une unité de commande correspondante (206) et

(d) comme autre interface, un deuxième commutateur (179, 211), entre "Température réduite" (219) et "Hors gel" (220), est relié par l'intermédiaire de l'élément OU (175) (Fig. 2b et 2c).

3. Appareil de commande et de réglage selon revendication 2,
caractérisé par le fait
que la première unité d'interconnexion comprend un élément flip-flop (222), dont la sortie "$\overline{Q}$" (167), reliée à la deuxième unité d'interconnexion (164) peut être commuté de chacun des états de service ("H", "L") dans l'autre ("L", "H"), par actionnement de la touche (228), à l'aide d'un signal de commande à la sortie CLOCK (221) de l'élément flip-flop (222) et dont l'entrée active (225) et l'entrée retardée (226) sont respectivement connectées avec les signaux de sortie (151) de l'inter horaire (105).

4. Appareil de commande et de réglage selon revendication 3,
caractérisé par le fait
que le deuxième commutateur (211) est actionnable, en tant qu'élément de construction logique, par la sortie d'un membre d'interconnexion prioritaire (par exemple: 164), à une autre entrée (176) de celui-ci, par l'intermédiaire d'un amplificateur opérationnel (202) servant de comparateur.

5. Appareil de commande et de réglage selon l'une des revendications 1 à 4,
caractérisé par le fait
que la source de courant (235) avec résistance interne à commande, comprend de préférence, en tant que circuit de courant, un transistor du type PNP, dont les électrodes sont raccordées comme suit: l'électrode de base (440) à la sortie (173) de l'interface de la deuxième unité d'interconnexion (164), ci-dessus mentionnée, par l'intermédiaire d'un membre d'inversion (238), l'électrode d'émetteur (443) au pôle positif (216) de la source de courant, par l'intermédiaire d'une résistance afférente, et l'électrode du collecteur à l'installation, par exemple: un élément d'affichage luminescent (444) pour indication de l'état de service de l'installation, par l'intermédiaire de la résistance correspondante (441), le parcours du transistor étant ponté par une résistance fixe.

6. Appareil de commande et de réglage selon l'une des revendications 1 à 5,
caractérisé par le fait
que le deuxième commutateur (169, 211) est coordonné à son unité d'interconnexion (184) par l'intermédiaire d'un amplificateur opérationnel (202) servant de membre d'interconnexion supplémentaire, sa première entrée (204) étant mise, par lui (169, 211) sous une tension de référence en fonction de la température de consigne en service "Température réduite" (219) ou en cas de mode de service

17

"Hors gel" (220), et dont la deuxième entrée (217) est soumise au signal de sortie de la sonde de température (217).

7. Appareil de commande et de réglage selon l'une des revendications 1 à 6,
caractérisé par le fait
qu'au moins deux des unités d'interconnexion afférentes aux sorties de a) l'élé,emt d'actionnement (touche 228), b) du second commutateur (169") et e) de la source de courant avec résistance interne à commande 235 sont réunies, côté entrée, dans une ligne conductrice (218) au raccord d'un appareil de commande (206), monté dans un boitier séparé de l'appareil de commande et de réglage proprement dit, de sorte que cette ligne conductrice se trouve raccordée à l'entrée d'au moins l'un des amplificateurs opérationnels (201, 202) servant de comparateurs, et, le cas échéant, à la sortie de la source de courant (235) avec résistance interne à commande respectivement à entrée (204) de l'élément logique installé en amont de l'autre unité d'interconnexion.

8. Appareil de commande et de réglage selon revendication 7,
caractérisé par le fait
qu'une touche (228) est coordonnée, en parallèle, à la sonde de température (217), dans l'unité de commande, l'actionnement de cette touche (228) libérant, dans le circuit de sortie du circuit d'excitation (230, 231), le signal de sortie de l'unité d'interconnexion (161) et, partant de là, le signal des unités d'interconnexion y raccordées, ce, à la suite de quoi, le commutateur électromécanique ou mécanique, raccordé à ce circuit, est commutable de l'état de service MARCHE à l'état de service ARRET et inversement.

9. Appareil de commande et de réglage selon revendications 7 et 8,
caractérisé par
le montage en parallèle de la touche (228), de la sonde (217) et de la diode luminescente (444), servant d'élément indicateur, dans l'unité de commande (206), avec conducteur bipolaire à l'entrée (205, 520) de l'appareil de commande et de réglage.

10. Appareil de commande et de réglage selon l'un des revendications 7 à 9,
caractérisé par le fait
que l'unité de commande est montée avec un raccord bipolaire dans un boitier encastré ou en saillie, par exemple: pour un programme de structures d'appareils d'installation, combinée, au choix, avec des commutateurs d'éclairage, des prises de courants femelles et autres éléments d'installation pour montage direct dans un cadre support, relié fixement à un anneau de retenue, soit, avec griffes d'écartement ou ouvertures, pour fixation par vis dans une boîte de branchement encastrée normalisée, soit directement avec le cadre support prémentionné, à l'aide de la plaque de recouvrement (561), pourvue, latéralement, de mentonnets à déclic (563, 564) faisant corps avec elle, pour fixation amovible dans l'anneau support respectivement directement dans la boîte de branchement encastrée.

11. Appareil de commande et de réglage selon revendication 10,
caractérisé par le fait
qu'une plaque de recouvrement (561) porte une cage de protection (565) avec colonnes d'écartement (566), à l'intérieur de laquelle une sonde de température (567), un bouton d'actionnement (568) pour la touche et la diode luminescente (569) sont montés visibles et accessibles, et que les éléments de construction et de raccordement correspondants, par exemple: bornes pour les raccords (518, 205), sont montés sur une plaque conductrice (562), maintenue sur la face inférieure du carter à l'aide de dispositifs à déclic ou d'autres éléments de fixation instantanée analogues.

Fig.1

**FIG.2a**

FIG.2b

erste
Verknüpfungs-
Einheit (a)
161

zweite
Verknüpfungs-
Einheit (b)
164

dritte
Verknüpfungs-
Einheit (c)
184

EP 0 273 064 B1

# FIG.2C

161
erste
Verknüpfungs-
Einheit (a)

164
zweite
Verknüpfungs-
Einheit (b)

184
dritte
Verknüpfungs-
Einheit (c)

FIG.3a

FIG.36

FIG.4

EP 0 273 064 B1

# FIG. 5a

# FIG. 5b